(19) **Europäisches Patentamt / European Patent Office / Office européen des brevets**

(11) **EP 3 109 269 B1**

(12) **EUROPÄISCHE PATENTSCHRIFT**

(45) Veröffentlichungstag und Bekanntmachung des Hinweises auf die Patenterteilung:
**31.10.2018 Patentblatt 2018/44**

(21) Anmeldenummer: **15173729.3**

(22) Anmeldetag: **25.06.2015**

(51) Int Cl.:
*C08G 18/48* (2006.01)          *C08G 18/66* (2006.01)
*C08G 18/73* (2006.01)          *C08G 18/76* (2006.01)
*C08G 18/77* (2006.01)          *C08G 18/08* (2006.01)
*C08G 18/12* (2006.01)          *C08G 18/28* (2006.01)
*C08G 18/32* (2006.01)          *C08G 18/42* (2006.01)
*C08G 18/44* (2006.01)

(54) **HARNSTOFFFREIE POLYURETHAN-DISPERSIONEN**

UREA FREE POLYURETHANE DISPERSIONS

DISPERSIONS DE POLYURETHANE SANS UREE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**28.12.2016 Patentblatt 2016/52**

(73) Patentinhaber: **Covestro Deutschland AG**
**51373 Leverkusen (DE)**

(72) Erfinder: **GRABLOWITZ, Hans Georg**
**50733 Köln (DE)**

(74) Vertreter: **Levpat**
**c/o Covestro AG**
**Gebäude 4825**
**51365 Leverkusen (DE)**

(56) Entgegenhaltungen:
**EP-A1- 0 634 431          EP-A1- 0 678 536**
**EP-A1- 0 839 885          WO-A1-2010/108676**
**WO-A2-2012/130711          DE-A1- 2 503 872**
**DE-A1- 3 903 804          DE-C1- 4 344 063**

## Beschreibung

Die vorliegende Erfindung betrifft eine wässrige Polyurethan-Dispersion, ein Verfahren zur Herstellung einer wässrigen Polyurethan-Dispersion, ihre Verwendung zur Herstellung von Lacken, Beschichtungen, Klebstoffen oder Dichtstoffen, wässrige 1- oder 2-Komponenten-Beschichtungsmittel sowie Lacke, Beschichtungen, Klebstoffe oder Dichtstoffe.

Wässrige Polyurethan-Dispersionen werden heute häufig in einem zweistufigen Verfahren hergestellt, bei dem in der Regel zunächst eine Polyol-Komponente mit einem molaren Überschuss an einer Polyisocyanatkomponente zu einem NCO-funktionellen Prepolymer umgesetzt wird. Dieses NCO-funktionelle Prepolymer wird im Anschluss oder gegebenenfalls bereits bei der Herstellung gegebenenfalls in einem Lösungsmittel gelöst und durch Zugabe einer Verbindung kettenverlängert, welche mindestens zwei gegenüber Isocyanatgruppen reaktive Gruppen aufweist (auch häufig als Kettenverlängerungsmittel bezeichnet). Dies bedeutet, dass die Molmasse der ursprünglichen Prepolymere durch Reaktion ihrer NCO-Gruppen mit den gegenüber NCO-reaktiven Gruppen des Kettenverlängerungsmittels erhöht wird. Im Anschluss wird das so erhaltene höhermolekulare Polyurethan in Wasser dispergiert und gegebenenfalls das Lösungsmittel abdestilliert. Die Einführung der für die Dispergierung erforderlichen hydrophilen Gruppen erfolgt meist durch Einbau von ionischen, potentiell ionischen oder nicht-ionischen Gruppen aufweisenden Polyolen in das Prepolymer oder durch Verwendung von Kettenverlängerungsmitteln, welche entsprechende Gruppen aufweisen.

Als gegenüber NCO-reaktive Gruppen der Kettenverlängerungsmittel werden in der Regel Aminogruppen verwendet, da sowohl primäre als auch sekundäre Amine sehr reaktiv gegenüber NCO-Gruppen sind. Gängige Kettenverlängerungsmittel sind beispielsweise1,2-Ethylendiamin, 1,2- und 1,3-Diaminopropan, 1,4-Diaminobutan, 1,6-Diaminohexan, Isophorondiamin, ein Isomerengemisch von 2,2,4- und 2,4,4-Trimethylhexamethylendiamin, 2-Methylpentamethylendiamin, Diethylentriamin, 4,4-Diaminodicyclohexylmethan, Hydrazinhydrat, und/oder Dimethylethylendiamin, Diethanolamin, 3-Amino-1-methylaminopropan, 3-Amino-1-ethylaminopropan, 3-Amino-1-cyclohexylaminopropan, 3-Amino-1-methylaminobutan, Alkanolamine wie N-Aminoethylethanolamin, Ethanolamin, 3-Aminopropanol, Neopentanolamin, Adipinsäuredihydrazid, Oxalsäuredihydrazid, Carbohydrazid, Bernstein-säuredihydrazid oder längerkettige, aminofunktionelle Verbindungen wie Polyetheramine ("Jeffamine") . Bei der Reaktion der Isocyanat-Gruppe mit einem Amin entsteht zwangsläufig immer eine Harnstoff-Gruppe, weshalb es sich bei den meisten als "Polyurethan" bezeichneten Verbindungen tatsächlich um "Polyurethanharnstoffe" handelt.

Da Harnstoffgruppen einem Polymer eine größere Härte verleihen als Urethangruppen, beeinflusst die Anwesenheit solcher durch Kettenverlängerung mit einem Amin erzeugten Harnstoffgruppen auch die Eigenschaften von Polyurethanen. Jedoch ist eine entsprechende Härte des Polyurethanharnstoffs nicht für alle Anwendungen wünschenswert. Ebenso sind die starken Wasserstoffbrückenbindungen der Harnstoffgruppen dafür verantwortlich, dass Polyurethanharnstoffe meist schlechter löslich sind als entsprechende reine Polyurethane. Auch aus diesem Grund ist für einige Anwendungen die Reduzierung der Harnstoffgruppen in der Polymerkette wünschenswert.

Die hohe Reaktivität der Amino-Gruppe gegenüber der Isocyanat-Gruppe führt zudem dazu, dass die Reaktion an sich zwar sehr schnell abläuft, wodurch jedoch die Kontrolle über die Reaktion teilweise erschwert ist. Je nach Prozessführung kann dies sogar dazu führen, dass die Anforderungen an die Handhabung der Edukte sehr hoch sind, um eine vorzeitige Reaktion der Edukte beispielsweise in Zuführungsrohrleitungen zum eigentlichen Reaktor zu vermeiden. Unter dem Gesichtspunkt der einfacheren Prozessführung wäre es in einigen Fällen zusätzlich vorteilhaft, die Komplexität der Herstellung von Polyurethanen beispielsweise durch Verringerung der Anzahl an anzusetzenden Edukten reduziert werden könnte.

Grundsätzlich sind Verfahren zur Herstellung von Polyurethanen, welche keine Harnstoffgruppen aufweisen, bekannt.

So beschreibt die EP 0 669 352 A1 wässrige Polyester-Polyurethan-Dispersionen, welche frei von Harnstoffgruppen sein können. Die Polyester-Polyurethane der EP 0 669 352 A1 werden hergestellt durch die Reaktion von unterschiedlichen Polyolen mit einer Polyisocyanatkomponente, wobei jedoch keine Kettenverlängerung stattfindet. Solche Produkte wurden für den Einsatz als 2-Komponenten- Systeme entwickelt. Dementsprechend weisen die dort beschriebenen Polyurethane niedrige Molmassen auf, welche durch den theoretischen OH-Gehalt von 0,25 bis 6,5 Gew.-% ersichtlich sind. Solche Molmassen sind jedoch insbesondere für 1-Komponenten-Zusammensetzungen meist nicht ausreichend, um die gewünschten mechanischen Eigenschaften der gehärteten Zusammensetzung zu erzielen. Ähnliche Polyester-Polyurethan-Dispersionen werden auch in der EP 0 578 940 A1 offenbart. Auch hier wird kein Verfahrensschritt der Kettenverlängerung durchgeführt, so dass die resultierenden Molmassen ebenfalls gering und insbesondere für die die Verwendung in 2-Komponenten-Systemen geeignet sind. Zwar offenbart die EP 0 578 940 A1 im Allgemeinen, dass hohe Molmassen erhältlich wären, diese sind jedoch in der Praxis mit den dort angegebenen Ausgangskomponenten und Verhältnissen (insbesondere auch ohne Kettenverlängerung) tatsächlich nicht erzielbar und wünschenswert, da dieses Dokument 2-Komponenten-Systeme betrifft.

Auf eine ähnliche Weise werden in der EP 2 239 286 A1 Polyester-Polyurethane hergestellt, welche eine zahlenmittlere Molmasse von 700 bis 3000 g/mol und damit einen OH-Gehalt von 2,5 Gew.-% aufweisen. Die Polyester-Polyurethane der EP 0 751 197 A1 weisen OH-Gehalte zwischen 0,6 bis 1,8 Gew.-% auf. Ebenso weisen die Polyester-Polyurethane der WO 2010/091898 A1 einen OH-Gehalt von 1,4 Gew.-% auf.

In der EP 1 790 674 A1 werden hydroxyfunktionelle, Urethan-Gruppen enthaltende Polyester-Dispersionen beschrieben, welche ebenfalls keine Harnstoffgruppen aufweisen. Die Polymere werden entweder durch Reaktion von Polyolen mit Polyisocyanaten ohne einen Kettenverlängerungsschritt hergestellt oder über die Bildung eines NCO-funktionellen Prepolymers und eine anschließende Kettenverlängerung mit einem Polyesterpolyol. Nachteilig an dem hier beschriebenen Verfahren ist die Tatsache, dass man bei der Kettenverlängerung mit verzweigten Polyester-Polyolen und einer Funktionalität > 3 durch den Äquivalenzpunkt beider Reaktionspartner läuft. Dies bedeutet, dass zu einem bestimmten Zeitpunkt der Kettenverlängerung die [NCO] und [OH] Konzentration gleich groß sind und damit das Risiko einer irreversiblen Vergelung steigt.

DE3903804A1 offenbart eine wässrige Beschichtungsdispersion und ihre Verwendung.

EP0634431A1 offenbart eine wässrige Dispersion von Polyurethanharzen, ein Verfahren zu ihrer Herstellung, Beschichtungszusammensetzungen enthaltend die Dispersion sowie ihre Verwendung.

WO2012/130711A2 offenbart latent-reaktive Polyurethandispersionen mit aktivierbaren Verzweigern.

EP0678536A1 offenbart eine wässrige Dispersion basierend auf Polymer/Polyurethanharzen, einem Verfahren zu ihrer Herstellung , Beschichtungen und ihrer Verwendung.

DE4344063C1 offenbart wässrige Bindemitteldispersionen für physikalisch trocknende Überzugsmittel und deren Verwendung.

WO2010/108676A1 offenbart ein Verfahren zur Formulierung einer reaktiven Polyurethanemulsion.

DE2503872A1 offenbart Perfluoralkylthiogruppen enthaltende Polyurethane, Verfahren zu ihrer Herstellung und ihre Verwendung.

EP0839885A1 offenbart eine wässrige Bindemitteldispersion für physikalisch trocknende Beschichtungen und ihre Verwendung.

Ausgehend von diesem Stand der Technik lag der vorliegenden Erfindung die Aufgabe zu Grunde, eine wässrige Polyurethan-Dispersion bereitzustellen, welche mindestens einen, vorzugsweise alle der oben genannten Nachteile des Stands der Technik behebt. Insbesondere lag der vorliegenden Erfindung die Aufgabe zu Grunde, eine wässrige Polyurethan-Dispersion bereitzustellen, welche keine Harnstoffgruppen und dennoch eine ausreichend hohe Molmasse aufweist. Insbesondere sollte die Molmasse ausreichend sein, um aus der Polyurethan-Dispersion auch 1-Komponenten-Beschichtungssysteme herstellen zu können, wobei die resultierenden gehärteten Zusammensetzungen ausreichend hohe mechanische Eigenschaften aufweisen. Zudem sollte insbesondere das Risiko der irreversiblen Vergelung während des Herstellungsverfahrens minimiert werden. Daher sollte vorzugsweise das resultierende Polyurethan eine gute Dispergierbarkeit in Wasser aufweisen, um für wasserbasierte Beschichtungssysteme geeignet zu sein.

Diese Aufgaben wurden gelöst durch die Bereitstellung der erfindungsgemäßen wässrigen Polyurethan-Dispersion, das erfindungsgemäße Verfahren zur Herstellung einer wässrigen Polyurethan-Dispersion, ihre erfindungsgemäße Verwendung zur Herstellung von Lacken, Beschichtungen, Klebstoffen oder Dichtstoffen, die erfindungsgemäßen wässrige 1- oder 2-Komponenten-Beschichtungsmittel sowie die erfindungsgemäßen Lacke, Beschichtungen, Klebstoffe oder Dichtstoffe, wie im Folgenden näher beschrieben.

Gegenstand der vorliegenden Erfindung ist eine wässrige Polyurethan-Dispersion, enthaltend das Polyurethan (P), wobei das Polyurethan (P) hergestellt wird durch Kettenverlängerung mindestens eines hydroxyfunktionellen Prepolymers (A) mit mindestens einem Polyisocyanat (B), wobei das hydroxyfunktionelle Prepolymer (A) mindestens die folgenden Aufbaukomponenten umfasst:

(A1) mindestens ein Polyol mit einer Funktionalität > 1,

(A2) gegebenenfalls mindestens ein Diol, welches von (A1) verschieden ist,

(A3) gegebenenfalls mindestens eine hydrophile Aufbaukomponente, welche mindestens eine hydrophile Gruppe, welche ausgewählt wird aus der Gruppe, bestehend aus einer ionischen Gruppe, einer potentiell ionischen Gruppe, einer nicht-ionischen Gruppe und beliebigen Mischungen daraus, und mindestens eine Hydroxylgruppe aufweist, und

(A4) mindestens eine Polyisocyanatverbindung,

und wobei das Polyurethan (P) weniger als 0,1 Gew.-% Harnstoffgruppen, bezogen auf =N-(C=O)-N=, aufweist, dadurch gekennzeichnet, dass das Polyurethan (P) einen theoretischen Gehalt an Hydroxylgruppen von weniger als 0,25 Gew.-% bezogen auf das Gesamtgewicht des Polyurethans im getrockneten Zustand aufweist.

In einem weiteren Aspekt ist Gegenstand der vorliegenden Erfindung ein Verfahren zur Herstellung einer wässrigen Polyurethan-Dispersion, umfassend die folgenden Schritte in der angegebenen Reihenfolge:

(i) Herstellung eines hydroxyfunktionellen Prepolymers (A) aus mindestens den folgenden Aufbaukomponenten:

(A1) mindestens ein Polyol mit einer Funktionalität > 1,

(A2) gegebenenfalls mindestens ein Diol, welches von (A1) verschieden ist,

(A3) gegebenenfalls mindestens eine hydrophile Aufbaukomponente, welche mindestens eine hydrophile Gruppe, welche ausgewählt wird aus der Gruppe, bestehend aus einer ionischen Gruppe, einer potentiell ionischen Gruppe, einer nicht-ionischen Gruppe und beliebigen Mischungen daraus, und mindestens eine Hydroxylgruppe aufweist, und

(A4) mindestens eine Polyisocyanatverbindung,

(ii) Kettenverlängerung des aus Schritt (i) erhaltenen hydroxyfunktionellen Prepolymers mit mindestens einem Polyisocyanat (B) zu einem Grad, dass das resultierende Polyurethan (P) einen theoretischen Gehalt an Hydroxylgruppen von weniger als 0,25 Gew.-% bezogen auf das Gesamtgewicht des Polyurethans im getrockneten Zustand aufweist, und wobei das resultierende Polyurethan (P) weniger als 0,1 Gew.-% Harnstoffgruppen, bezogen auf =N-(C=O)-N=, aufweist,

(iii) gegebenenfalls Neutralisation der potentiell ionischen Gruppe der optionalen Aufbaukomponente (A3) vor oder nach Schritt (ii), und

(iv) Dispergierung des aus Schritt (ii) oder (iii) erhaltenen Polyurethans (P) in Wasser.

Es hat sich herausgestellt, dass durch die Herstellung des OH-funktionellen Prepolymers (A) und die anschließende Kettenverlängerung mit dem Polyisocyanat (B) Polyurethane (P) erhalten werden können, welche weniger als 0,1 Gew.-% Harnstoffgruppen, bezogen auf =N-(C=O)-N=, aufweisen und dabei gleichzeitig eine hohe Molmasse, ausgedrückt durch den Gehalt von Hydroxylgruppen von weniger als 0,25 Gew.-% aufweisen. Es hat sich insbesondere herausgestellt, dass durch diese Verfahrensweise zum einen die Prozessführung einfach ist, da insgesamt eine Substanzklasse an Edukten weniger als bei den Verfahren des Stands der Technik erforderlich ist. Dies bedeutet, dass bei der vorliegenden Verfahrensweise ausschließlich Polyole und Polyisocyanate verwendet werden können und damit insbesondere auf die Verwendung von Aminen verzichtet werden kann. Auch hat sich herausgestellt, dass die Verfahrensweise über die Bildung eines hydroxyfunktionellen Prepolymers (A) insgesamt eine flexible und gleichzeitig kontrollierte Herstellung von Polyurethan-Dispersionen erlaubt. Grundsätzlich kann das Prepolymer (A) isoliert und ohne besondere Maßnahmen gelagert werden. Ein solches Vorgehen wäre mit einem NCO-funktionellen Prepolymer nicht möglich, da die vergleichsweise reaktiven Isocyanatgruppen beispielsweise bereits mit Spuren von Wasser oder anderen Verunreinigungen reagieren oder auch andere ungewollte Nebenreaktionen wie Di- oder Trimersierungen eingehen können. Die Verfahrensweise über ein OH-funktionelles Prepolymer führt jedoch dazu, dass die Kettenverlängerung mittels Polyisocyanat (B) vollkommen losgelöst von der Herstellung des Prepolymers (A) erfolgen kann. Dies kann zum einen zeitlich gesehen werden. Dies bedeutet, dass die Kettenverlängerung zu einem anderen Zeitpunkt stattfinden kann als die Synthese des Prepolymers (A), was dazu führt, dass Ansatzgrößen der jeweiligen Reaktionen jeweils individuell unter dem Gesichtspunkt der herzustellenden gewünschten Menge, der Wirtschaftlichkeit der Lagerung etc. erfolgen kann. Gleichzeitig führt dies zum anderen auch zu einer kontrollierteren Herstellung von Polyurethan-Dispersionen. Beispielsweise ist eine Mischung unterschiedlicher Prepolymere (A) hierdurch wesentlich einfacher und exakter möglich und das resultierende Polyurethan kann gezielt maßgeschneidert werden.

Zusätzlich werden die Nachteile vermieden, welche zwangsläufig durch Verfahren entstehen, bei denen NCO-funktionelle Prepolymere eingesetzt werden. Solche NCO-funktionellen Prepolymere weisen immer größere Mengen an freiem, niedermolekularem Isocyanat auf. Häufig ist daher bei dieser Verfahrensweise ein weiterer Schritt der Dünnschichtdestillation zur Aufreinigung der Prepolymere notwendig. Neben diesem energetischen und zeitlichen Aspekt des Entfalls dieser Aufreinigung weisen die OH-funktionellen Prepolymere der vorliegenden Erfindung eine deutlich geringe Toxizität auf. Zudem bringt der erfindungsgemäße Verfahrensweg den Vorteil, dass der Äquivalenzpunkt während der Herstellung des niedermolekularen Prepolymeren durchlaufen wird, wodurch das Risiko bezüglich einer möglichen irreversiblen Vergelung deutlich minimiert wird.

Insbesondere hat sich auch herausgestellt, dass durch die erfindungsgemäße Vorgehensweise aliphatische oder cycloaliphatische Polyisocyanate (B) zur Kettenverlängerung verwendet werden können. Da aliphatische Polyisocyanate weniger reaktiv gegenüber Hydroxylgruppen sind als aromatische Polyisocyanate, war es erfindungsgemäß überraschend, dass dennoch kurze Reaktionszeiten des Verfahrensschritts der Kettenverlängerung erhalten wurden. Der Fachmann würde hier davon ausgehen, dass die Reaktionszeit bei aliphatischen Polyisocyanaten so lang ist, dass keine wirtschaftliche Nutzung sinnvoll erscheint (siehe beispielsweise die Geschwindigkeitskonstanten der jeweiligen Reaktionen wie sie unter anderem in P. Król, J. Appl. Polym. Sci., 57,6, S. 739 ff beschrieben sind) Dieses Vorurteil wurde überraschenderweise widerlegt.

In einer Ausführungsform wird daher bevorzugt ein aliphatisches Polyisocyanat (B) verwendet. In einer anderen Ausführungsform wird ebenso bevorzugt ein aromatisches Polyisocyanat (B) verwendet.

Erfindungsgemäß bedeuten die Bezugnahmen auf "umfassend", "enthaltend" usw. bevorzugt "im Wesentlichen bestehend aus" und ganz besonders bevorzugt "bestehend aus".

Der Begriff "Dispersion" im Sinne der Erfindung umfasst sowohl wässrige Dispersionen als auch wässrige Lösungen. Die Frage, ob es sich um eine Dispersion oder Lösung handelt, ist insbesondere vom Gehalt an ionischen Gruppen und vom Molekulargewicht des Polymers abhängig und teilweise kann hier keine scharfe Grenze gezogen werden, weshalb erfindungsgemäß beide Ausgestaltungen umfasst sind. Besonders bevorzugt handelt es sich jedoch um eine Dispersion.

Im Folgenden werden die erfindungsgemäße Polyurethan-Dispersion wie auch das erfindungsgemäße Verfahren näher und in bevorzugten Ausgestaltungen beschrieben. Sämtliche Merkmale beziehen sich sowohl auf die Dispersion als auch auf das Verfahren, falls nicht explizit anders angegeben. Daher ist es insbesondere bevorzugt, dass die erfindungsgemäße Polyurethan-Dispersion erhältlich ist bzw. erhalten wird nach dem erfindungsgemäßen Verfahren.

Das hydroxyfunktionelle Prepolymer (A), wie gemäß der vorliegenden Erfindung verwendet, umfasst mindestens die folgenden Aufbaukomponenten:

(A1) mindestens ein Polyol mit einer Funktionalität > 1,

(A2) gegebenenfalls mindestens ein Diol, welches von (A1) verschieden ist,

(A3) gegebenenfalls mindestens eine hydrophile Aufbaukomponente, welche mindestens eine hydrophile Gruppe, welche ausgewählt wird aus der Gruppe, bestehend aus einer ionischen Gruppe, einer potentiell ionischen Gruppe, einer nicht-ionischen Gruppe und beliebigen Mischungen daraus, und mindestens eine Hydroxylgruppe aufweist, und

(A4) mindestens eine Polyisocyanatverbindung.

Bei der mindestens einen Polyolkomponente (A1) handelt es sich bevorzugt um ein Polyol, welches ausgewählt wird aus der Gruppe, bestehend aus einem Polyesterpolyol, Polyetherpolyol, Polyesteretherpolyol und einem Polycarbonatpolyol. Bevorzugt weist die Polyolkomponente (A1) eine Hydroxylfunktionalität von 1,2 bis 4, besonders bevorzugt von 1,4 bis 3, ganz besonders bevorzugt von 1,5 bis 2 auf.

Handelt es sich bei der Komponente (A1) um einen Polyester, so ist es bevorzugt, dass diese rechnerisch ermittelte theoretische Molekulargewichte von 500 bis 6000 g/mol, besonders bevorzugt von 750 bis 5000 g/mol und ganz besonders bevorzugt von 1000 bis 3000/mol aufweisen.

Das theoretische Molekulargewicht der Polyester wird bestimmt nach der Formel: Masse des Ansatzes [g] / (Mol COOH + Mol OH)- Val COOH.

Es ist bevorzugt, dass der Polyester eine Hydroxylfunktionalität von 1,2 bis 4, besonders bevorzugt von 1,4 bis 3, ganz besonders bevorzugt von 1,5 bis 2 aufweist. Es können dabei auch Mischungen verschiedener Polyester und auch Mischungen von Polyestern mit unterschiedlichen Funktionalitäten eingesetzt werden. Die Funktionalität entspricht dabei immer der mittleren Funktionalität der Mischung.

Bevorzugt eingesetzte Polyester (A1) sind Umsetzungsprodukte von

A1$_i$) 30 bis 77 Gew.-%, bevorzugt 40 bis 60 Gew.-% mindestens einer, mindestens difunktionellen Carbonsäure bzw. deren Anhydrids,

A1$_{ii}$) 23 bis 70 Gew.-%, bevorzugt 40 - 60 Gew.-% mindestens eines Diols,

A1$_{iii}$) 0 bis 10 Gew.-% mindestens eines Alkohols mit mehr als 2 Hydroxylgruppen,

A1$_{iv}$) 0 bis 10 Gew.-% sonstige hydroxy- und/oder carboxyfunktioneller Komponenten und/oder Caprolacton.

Geeignete Polyesterrohstoffe A1$_i$) sind z.B. Phthalsäureanhydrid, Isophthalsäure, Terephthalsäure, Adipinsäure, Sebacinsäure, Korksäure, Bernsteinsäure, Maleinsäureanhydrid, Fumarsäure, Dimerfettsäuren, Tetrahydrophthalsäureanhydrid, Hexahydrophthalsäureanhydrid, Cyclohexandicarbonsäure und/oder Trimellithsäureanhydrid oder deren Mischungen. Bevorzugte Komponenten A1$_i$) werden ausgewählt aus der Gruppe, bestehend aus Adipinsäure, Phthalsäureanhydrid, Tetrahydrophthalsäureanhydrid, Isophthalsäure und Glutarsäure, besonders bevorzugt Adipinsäure, Hexahydrophthalsäure und Phthalsäure sowie deren Anhydride.

Geeignete Polyesterrohstoffe $A1_{ii}$) sind z.B. 1,2-Ethylengykol, Diethylenglykol, Triethylenglykol, Tetraethylenglykol, 1,2-Propylenglykol, Dipropylenglykol, Tripropylenglykol, 1,3-Propandiol, 1,3-Butandiol, 1,4-Butandiol, 1,6-Hexandiol, Neopentylglykol, 1,4-Cyclohexandimethanol, 1,4-Cyclohexandiol, Butendiol, Butindiol, hydrierte Bisphenole, Trimethylpentandiol, 1,8-Octandiol und/oder Tricyclodecandimethanol sowie deren Mischungen. Bevorzugte Komponenten $A1_{ii}$) werden ausgewählt aus der Gruppe, bestehend aus 1,4-Butandiol, Neopentylglykol, 1,2-Propylenglykol, Ethylenglykol, Diethylenglykol und 1,6-Hexandiol. Besonders bevorzugte Komponenten $A1_{ii}$) werden ausgewählt aus der Gruppe, bestehend aus Neopentylglykol, Butandiol, Ethylenglykol, Diethylenglykol und Hexandiol.

Geeignete optionale Polyesterrohstoffe $A1_{iii}$) sind z.B. Trimethylolpropan, ethoxyliertes Trimethylolpropan, propoxyliertes Trimethylolpropan, propoxyliertes Glycerin, ethoxyliertes Glycerin, Glycerin, Pentaerythrit, Rizinusöl sowie deren Mischungen. Bevorzugte Komponente $A1_{iii}$) ist Trimethylolpropan.

Geeignete optional einzusetzende Polyesterrohstoffe $A1_{iv}$) sind z.B. $C_8$-$C_{22}$-Fettsäuren wie z.B. 2-Ethylhexansäure, Stearinsäure, hydrierte Fettsäuren, Benzoesäure, monofunktionelle Alkohole wie Butylglykol, Butyldiglykol, Cyclohexanol, andere monofunktionelle Alkohole wie z.B. Polyethylenoxide, Polypropylenoxide, Polyethylen/propylenoxidmisch- bzw. Blockcopolymere sowie deren Mischungen.

Die Polyester können nach an sich bekannten Verfahren unter Abspaltung von Wasser bei Temperaturen von 100 bis 260°C, gegebenenfalls unter Mitverwendung üblicher Veresterungskatalysatoren, vorzugsweise nach dem Prinzip einer Schmelz- oder Azeotropkondensation, hergestellt werden. Bevorzugtes Herstellverfahren für die Polyester ist eine Schmelzkondensation im Vakuum oder unter Einsatz eines Inertgases. Weiterhin eignen sich auch solche Polyesterpolyole, welche durch die Polymerisation von nachwachsenden Rohstoffen zugänglich sind. Beispielhaft kann hier die Verwendung von Bernsteinsäure, welche durch einen Fermentationsprozess, wie beispielsweise beschrieben in der DE 10 2008 051727 A1 oder DE 10 2007 019184 A1, erhalten wird, erwähnt werden.

Handelt es sich bei der Komponente (A1) um ein Polycarbonat, ist es bevorzugt, dass es sich um ein lineares, hydroxfunktionelles Polycarbonat handelt. Geeignete Polycarbonate sind solche, die z.B. durch Reaktion von Kohlensäurederivaten, z.B. Diphenylcarbonat, Dimethylcarbonat oder Phosgen mit Polyolen, bevorzugt Diolen erhältlich sind. Als derartige Diole kommen z.B. Ethylenglykol, 1,2- und 1,3-Propandiol, 1,3- und 1,4-Butandiol, 1,6-Hexandiol, 1,8-Octandiol, Neopentylglykol, 1,4-Bishydroxymethylcyclohexan, 2-Methyl-1,3-propandiol, 2,2,4-Trimethylpentandiol-1,3, Dipropylenglykol, Polypropylenglykole, Dibutylenglykol, Polybutylenglykole, Bisphenol A, Tetrabrombisphenol A aber auch Lacton-modifizierte Diole in Frage. Bevorzugt enthält die Diolkomponente 40 bis 100 Gew.-% Hexandiol, bevorzugt 1,6-Hexandiol und/oder Hexandiol-Derivate, bevorzugt solche, die neben endständigen OH-Gruppen Ether- oder Estergruppen aufweisen, z.B. Produkte, die durch Umsetzung von 1 Mol Hexandiol mit mindestens 1 Mol, bevorzugt 1 bis 2 Mol Caprolacton oder durch Veretherung von Hexandiol mit sich selbst zum Di- oder Trihexylenglykol erhalten wurden. Auch Polyether-Polycarbonatdiole können eingesetzt werden. Die Hydroxylpolycarbonate sollten im Wesentlichen linear sein. Sie können jedoch gegebenenfalls durch den Einbau polyfunktioneller Komponenten, insbesondere niedermolekularer Polyole, leicht verzweigt werden. Hierzu eignen sich beispielsweise Glycerin, Trimethylolpropan, Hexantriol-1,2,6, Butantriol-1,2,4, Trimethylolpropan, Pentaerythrit, Chinit, Mannit, Sorbit, Methylglykosid oder 1,3,4,6-Dianhydrohexite. Die Herstellung der Polycarbonatpolyole erfolgt bevorzugt nach dem in der EP-A 1 404 740 (S. 6 - 8, Beispiele 1-6) und EP-A 1 477 508 (S. 5, Beispiel 3) beschriebenen Herstellverfahren.

Besonders bevorzugte Polycarbonatpolyole sind solche, die mindestens 25 Gew.-% 1,4-Butandiol als Aufbaukomponente enthalten und eine mittlere Hydroxylfunktionalität von 1,6 bis 4, bevorzugt, 1,8 bis 3 und besonders bevorzugt 1,9 bis 2,3 und ein zahlenmittleres Molekulargewicht von 240 bis 8000 g/mol, bevorzugt von 500 bis 3000 g/mol, besonders bevorzugt von 750 bis 2500 g/mol aufweisen. Bevorzugt enthält die Diolkompomponente 45 bis 100 Gew.-% 1,4-Butandiol, und 1 bis 55 Gew.-% 1,6-Hexandiol, besonders bevorzugt 60 bis 100 Gew.-% 1,4-Butandiol und 1 bis 40 Gew.-% 1,6-Hexandiol.

Handelt es sich bei der Komponente (A1) um ein Polyetherpolyole, sind diese bevorzugt Polyadditionsprodukte der Styroloxide, des Ethylenoxid, Propylenoxid, Tetrahydrofuran, Butylenoxid, E-pichlorhydrins, sowie ihre Mischadditions- und Pfropfprodukte, sowie die durch Kondensation von mehrwertigen Alkoholen oder Mischungen derselben und die durch Alkoxylierung von mehrwertigen Alkoholen, Aminen und Aminoalkoholen gewonnenen Polyetherpolyole.

Geeignete hydroxyfunktionelle Polyether weisen bevorzugt OH-Funktionalitäten von 1,2 bis 4, besonders bevorzugt von 1,4 bis 3, ganz besonders bevorzugt von 1,5 bis 2 auf. Ebenso bevorzugt weisen sie OH-Zahlen von 50 bis 700, bevorzugt von 100 bis 600 mg KOH/g Feststoff auf. Bevorzugte Molekulargewichte $M_n$ liegen im Bereich von 106 bis 4 000 g/mol, besonders bevorzugt von 200 bis 3500 und ganz besonders bevorzugt von 500 bis 3000 g/mol.

Besonders bevorzugt handelt es sich um Alkoxylierungsprodukte hydroxyfunktioneller Startermolekuele wie Ethylenglykol, Propylenglykol, Butandiol, Hexandiol, Trimethylolpropan, Glycerin, Pentaerythrit, Sorbit oder Gemische dieser und auch anderer hydroxyfunktioneller Verbindungen mit Propylenoxid oder Butylenoxid. Besonders bevorzugt sind Polypropylenoxidpolyole und Polytetramethylenoxidpolyole sowie deren Mischungen.

Die Komponente (A1) kann auch beliebige Mischungen der oben genannten Polyole (auch in einer Polymerkette) umfassen.

Bei der optionalen Komponente (A2) handelt es sich bevorzugt um mindestens ein Diol, welches von (A1) verschieden ist und eine Molmasse von 62 bis 450 g/mol aufweist. Besonders bevorzugt handelt es sich um 1,2-Ethylengykol, Diethylenglykol, Triethylenglykol, Tetraethylenglykol, 1,2-Propylenglykol, Dipropylenglykol, Tripropylenglykol, 1,3-Propandiol, 1,3-Butandiol, 1,4-Butandiol, 1,6-Hexandiol, Neopentylglykol, 1,4-Cyclohexandimethanol, 1,4-Cyclohexandiol, Butendiol, Butindiol, hydrierte Bisphenole, Trimethylpentandiol, 1,8-Octandiol und/oder Tricyclodecandimethanol sowie deren Mischungen. Ganz besonders bevorzugt handelt es sich bei der optionalen Komponente (A2) um 1,4-Butandiol, 1,6-Hexandiol oder Neopentylglykol.

Die optionale Komponente (A3) umfasst mindestens eine hydrophile Gruppe, welche ausgewählt wird aus der Gruppe, bestehend aus einer ionischen Gruppe, einer potentiell ionischen Gruppe, einer nicht-ionischen Gruppe und beliebigen Mischungen daraus, und mindestens eine Hydroxylgruppe

Unter potentiell ionischen Gruppen sind im Rahmen dieser Erfindung solche Gruppen zu verstehen, die durch chemische Reaktion, insbesondere durch Neutralisation in eine ionische Gruppe überführt werden können. Bevorzugt werden unter "potentiell ionischen" Gruppen freien Säuregruppen verstanden. Ebenso bevorzugt handelt sich bei den durch Neutralisation mit Neutralisationsmitteln erhaltenen salzartigen Gruppen, beispielsweise Carboxylat- bzw. Sulphonatgruppen, um "ionische" Gruppen. Bevorzugt wird unter dem Begriff "nicht-ionisch" eine Verbindung verstanden, welche keine ionische Gruppe aufweist. Solche ionischen Gruppen können Sulfonat-, Carboxylat-, Phosphat- und Phosphonatgruppen sein. Die Komponente (A3) dient der Dispergierbarkeit des Polyurethans in Wasser.

Besonders bevorzugt umfasst Komponente (A3) mindestens eine hydrophile Aufbaukomponente, welche mindestens eine hydrophile Gruppe, welche ausgewählt wird aus der Gruppe, bestehend aus einer Säuregruppe, Polyoxyalkylenethergruppe und beliebigen Mischungen daraus, und mindestens eine Hydroxylgruppe aufweist. Geeignete Säuregruppen sind z.B. Carboxyl- und Sulphonsäuregruppen.

Besonders bevorzugt ist die Komponente (A3) als Aufbaukomponente des Polyurethans (P) vorhanden.

Ganz besonders bevorzugt wird als Komponente (A3) Dimethylolpropionsäure, Dimethylolbuttersäure und/oder Hydroxypivalinsäure, ganz besonders bevorzugt wird Dimethylolpropionsäure verwendet. Ebenfalls geeignete Säuren sind beispielsweise andere 2,2-Bis(hydroxymethyl)-alkancarbonsäure, wie z.B. Dimethylolessigsäure oder 2,2-Dimethylolpentansäure, Dihydroxybernsteinsäure, Michael-Additionsprodukte von Acrylsäure an Amine wie z.B. Isophorondiamin oder Hexamethylendiamin, oder Gemische derartiger Säuren und/oder Dimethylolpropionsäure und/oder Hydroxypivalinsäure. Ebenfalls möglich ist die Verwendung von gegebenenfalls Ethergruppen aufweisenden Sulfonsäurediolen der in US-A 4 108 814 beschriebenen Art.

Ebenso bevorzugt umfasst die Komponente (A3) eine monofunktionelle Polyethylenglykol-haltige Komponente, deren Anteil an Polyethylenglykol mindestens 50 Gew.-% beträgt und eine Molmasse Mn von 1200 g/mol bis 3000 g/mol aufweist. Diese Polyether enthalten bevorzugt einen Anteil von 50 Gew.-% bis 100 Gew.-% an Bausteinen, die vom Ethylenoxid abgeleitet sind, bevorzugt 70 Gew.-% bis 100 Gew-% und besonders bevorzugt 80 Gew.-% bis 100 Gew.-% wie sie in an sich bekannter Weise durch Alkoxylierung der unter (A2) genannten Startermoleküle zugänglich sind. Für die Alkoxylierungsreaktion geeignete Alkylenoxide sind insbesondere Ethylenoxid und Propylenoxid, die in beliebiger Reihenfolge oder auch im Gemisch bei der Alkoxylierungsreaktion eingesetzt werden können. Die Molmasse $M_n$ dieser monofunktionellen Polyethylenglykolhaltigen Komponente (A3) beträgt bevorzugt 300 g/mol bis 6000 g/mol, bevorzugt 1500 g/mol bis 3000 g/mol und besonders bevorzugt 2000 g/mol bis 3000 g/mol.

Geeignete derartige nichtionisch hydrophilierende, monofunktionelle Verbindungen sind beispielsweise monofunktionelle Alkoxypolyethylenglycole wie z.B. Methoxypolyethylenglykole (MPEG Carbowax® 2000 oder Methoxy PEG-40, Molgewichtsbereich 1800 bis 2200, The Dow Chemical Company) und monofunktionelle Polyethermonoalkylether wie z.B. LB 25 aufgebaut aus Butanol und Ethylenoxid sowie Propylenoxid, mit einer mittleren Molmasse $M_n$ von 2250 g/mol von Bayer Material Science.

Bevorzugt umfasst die Komponente (A3) sowohl eine Verbindung, welche mindestens eine ionische Gruppe oder potentiell ionische Gruppe und mindestens eine Hydroxylgruppe aufweist, bevorzugt die oben genannten Verbindungen, als auch eine Verbindung, welche mindestens eine nicht-ionische Gruppe und mindestens eine Hydroxylgruppe aufweist, bevorzugt die oben genannten Verbindungen. Dabei ist es besonders bevorzugt, dass die hydrophile Aufbaukomponente (A3) zumindest die folgenden Verbindungen umfasst:

(A3-1) mindestens eine ionische oder potentiell ionische Verbindung mit mindestens einer Säuregruppe und mindestens einer Hydroxylgruppe und

(A3-2) mindestens eine Polyethylenglykol-haltige Verbindung, deren Anteil an Polyethylenglykol mindestens 50 Gew.-% beträgt, die eine Molmasse Mn von 1200 g/mol bis 3000 g/mol und eine Hydroxylgruppe aufweist.

Dabei ist es bevorzugt, dass Komponente (A3-1) im Überschuss zu Komponente (A3-2) eingesetzt wird. Besonders bevorzugt, wird Komponente (A3-1) im 2 bis 5fachen Gewichtsüberschuss zur Komponente (A3-2) eingesetzt.

Bei der Komponente (A4) handelt es sich um mindestens eine Polyisocyanatverbindung. Dabei ist es bevorzugt, dass diese mindestens eine Polyisocyanatverbindung ausgewählt wird aus der Gruppe, bestehend aus aromatischen, araliphatischen, aliphatischen und cycloaliphatischen Polyisocyanatverbindungen mit einer NCO-Funktionalität von ≥ 2, welche optional Iminooxadiazindion-, Isocyanurat-, Uretdion-, Urethan-, Allophanat-, Biuret-, Harnstoff-, Oxadiazintrion, Oxazolidinon-, Acylharnstoff- und/oder Carbodiimid-Strukturen aufweisen können. Solche Polyisocyanatverbindungen sind dem Fachmann an sich bekannt. Sie können einzeln und in beliebigen Mischungen untereinander eingesetzt werden.

Beispiele geeigneter Polyisocyanate (A4) sind Butylendiisocyanat, Hexamethylendiisocyanat (HDI), Isophorondiisocyanat (IPDI), 2,2,4- und/oder 2,4,4-Trimethylhexamethylendiisocyanat, Pentamethylendiisocyanat (PDI), die isomeren Bis(4,4'-isocyanatocyclohexyl)methane oder deren Mischungen beliebigen Isomerengehalts, Isocyanatomethyl-1,8-octandiisocyanat, 1,4-Cyclohexylendiisocyanat, 1,4-Phenylendiisocyanat, 2,4- und/oder 2,6-Toluylendiisocyanat, 1,3- und 1,4-Bis-(2-isocyanato-prop-2-yl)-benzol (TMXDI), 1,3-Bis(isocyanato-methyl)benzol (XDI), 1,5-Naphthylendiisocyanat, 2,4'- oder 4,4'-Diphenylmethandiisocyanat, Triphenylmethan-4,4',4"-triisocyanat oder Derivate basierend auf den vorstehend genannten Diisocyanaten mit Uretdion-, Isocyanurat-, Urethan-, Allophanat-, Biuret-, Iminooxadiazindion- und/oder Oxadiazintrionstruktur mit mehr als 2 NCO Gruppen. Als Beispiel für ein nicht-modifiziertes Polyisocyanat mit mehr als 2 NCO-Gruppen pro Molekül sei z.B. 4-Isocyanatomethyl-1,8-octandiisocyanat (Nonantriisocyanat) genannt. Bevorzugt handelt es sich um Polyisocyanate oder Polyisocyanatgemische der vorstehend genannten Art mit ausschließlich aliphatisch und/oder cycloaliphatisch gebundenen Isocyanatgruppen. Besonders bevorzugt sind Hexamethylendiisocyanat, Isophorondiisocyanat, die isomeren Bis-(4,4'-isocyanatocyclohexyl)methan, Isomere des Toluoldiisocyanats, Diphenylmethandiisocyanat sowie deren Mischungen.

In einer bevorzugten Ausführungsform umfasst das Prepolymer (A) zumindest die folgenden Aufbaukomponenten:

(A1) mindestens ein Polyol mit einer Funktionalität > 1, welches ausgewählt wird aus der Gruppe, bestehend aus einem Polyesterpolyol, Polyetherpolyol, Polyesteretherpolyol und einem Polycarbonatpolyol,

(A2) gegebenenfalls mindestens ein Diol, welches von (A1) verschieden ist und eine Molmasse von 62 bis 450 g/mol aufweist,

(A3) gegebenenfalls mindestens eine hydrophile Aufbaukomponente, welche mindestens eine hydrophile Gruppe, welche ausgewählt wird aus der Gruppe, bestehend aus einer Säuregruppe,

Polyoxyalkylenethergruppe und beliebigen Mischungen daraus, und mindestens eine Hydroxylgruppe aufweist, und

(A4) mindestens eine Polyisocyanatverbindung, welche ausgewählt wird aus der Gruppe, bestehend aus aromatischen, araliphatischen, aliphatischen und cycloaliphatischen Polyisocyanatverbindungen mit einer NCO-Funktionalität von ≥ 2, welche optional Iminooxadiazindion-, Isocyanurat-, Uretdion-, Urethan-, Allophanat-, Biuret-, Harnstoff-, Oxadiazintrion, Oxazolidinon-, Acylharnstoff- und/oder Carbodiimid-Strukturen aufweisen können.

Bevorzugt umfasst das hydroxyfunktionelle Prepolymer (A) zumindest

50 bis 87 Gew.-% an (A1), besonders bevorzugt 55 bis 85 Gew.-% an (A1),

3 bis 11 Gew.-% an (A2), besonders bevorzugt 4 bis 10 Gew.-% an (A2),

0 bis 24 Gew.-% an (A3), besonders bevorzugt 0 bis 20 Gew.-% an (A3), ganz besonders bevorzugt 1 bis 20 Gew.-% an (A3) und 3 bis 20 Gew.-% an (A4), besonders bevorzugt 4 bis 18 Gew.-% an (A4),

wobei die Summe der Aufbaukomponenten (A1) bis (A4) 100 Gew.-% ergibt (dies schließt bevorzugt nicht aus, dass das Polyurethan noch weitere zusätzliche Aufbaukomponenten umfasst; die angegebenen Gewichtsprozente definieren nur die Verhältnisse der Gewichtsprozente (A1) bis (A4) zueinander).

Neben den oben beschriebenen Komponenten (A1) bis (A4) kann das Polyurethan der erfindungsgemäßen Dispersion weitere, in der Polyurethanchemie gängige Aufbaukomponenten aufweisen.

Die Herstellung des Prepolymers (A) gemäß dem erfindungsgemäßen Verfahrensschritt (i) erfolgt auf für den Fachmann bekannte Weise. Bevorzugt werden dabei alle OH-funktionellen Ausgangskomponenten, d. h. (A1) und gegebenenfalls (A2) und (A3) vorgelegt und auf die gewünschte Temperatur gebracht. Diese beträgt bevorzugt 40 bis 150 °C, ganz besonders bevorzugt 50 bis 130 °C und insbesondere bevorzugt 60 bis 120 °C. Daraufhin wird bevorzugt die Komponente (A4) hinzugeben. Es ist bevorzugt, dass bei der Herstellung des hydroxyfunktionellen Prepolymers (A) (sowohl im Zusammenhang mit der erfindungsgemäßen Dispersion als auch dem erfindungsgemäßen Verfahren) ein molares Verhältnis von Isocyanatgruppen zu gegenüber Isocyanat reaktiven Gruppe von 0,25 bis 0,95 , ganz besonders bevorzugt von 0,3 bis 0,7 und insbesondere bevorzugt von 0,4 bis 0,6 vorliegt (dieses Verhältnis wird vom Fachmann auch als Kennzahl bezeichnet). Dies bedeutet, dass die OH-funktionellen Komponenten im Überschuss zu den NCO-funktionellen Komponenten eingesetzt werden. Die Umsetzung zum Prepolymer (A) erfolgt so lange, bis im Wesentlichen alle NCO-Gruppen verbraucht sind (d. h. keine NCO-Gruppen mehr nachweisbar sind). Dem Fachmann sind Methoden zum Nachweis von NCO-Gruppen bekannt. Bevorzugt sind mittels FT-IR-Analyse keine NCO-Gruppen mehr nachweisbar.

In einer Ausführungsform ist es möglich, das so erhaltene Prepolymer zu isolieren und gegebenenfalls zu lagern. Dem Fachmann sind hierzu Methoden bekannt. Beispielsweise könnte das Prepolymer in einem Lösungsmittel, bevorzugt Aceton, gelöst werden. Daraufhin ist eine entsprechende Lagerung möglich.

Erfindungsgemäß wird das Prepolymer (A) kettenverlängert (siehe auch erfindungsgemäßen Verfahrensschritt (ii)). Unter einer Kettenverlängerung wird erfindungsgemäß eine Erhöhung der Molmasse des Prepolymers (A) verstanden. Eine "Kettenverlängerung" kann auch als eine "Umsetzung des mindestens einen hydroxyfunktionellen Prepolymers (A) mit mindestens einem Polyisocyanat (B)" bezeichnet werden. Bevorzugt wird hierunter mindestens eine Verdoppelung der Molmasse des Prepolymers (A) verstanden. Die Kettenverlängerung an sich erfolgt durch Reaktion mindestens eines Prepolymers (A) mit mindestens einer Polyisocyanatverbindung (B) gefolgt von weiteren Reaktionen. Erfindungsgemäß wird die Kettenverlängerung zu einem Grad durchgeführt, dass das resultierende Polyurethan (P) einen theoretischen Gehalt an Hydroxylgruppen von weniger als 0,25 Gew.-% bezogen auf das Gesamtgewicht des Polyurethans im getrockneten Zustand aufweist.

Unter dem theoretischen Gehalt an Hydroxylgruppen wird erfindungsgemäß der theoretisch berechnete Gehalt an verbleibenden OH-Gruppen im Polyurethan (P) in Gew.-% verstanden, wenn alle NCO-Gruppen des als Kettenverlängerungsmittel eingesetzten Polyisocyanats (B) mit den OH-Gruppen des Prepolymers (A) abreagiert haben. Der theoretische OH-Gehalt wird nach der folgenden Formel berechnet:

$$\text{Theoretischer OH-Gehalt} = ((\text{[eingesetzte OH-Gruppen in mol]}-\text{[eingesetzte NCO-Gruppen in mol]}*17)/\text{Masse des eingesetzten Prepolymers}) *100$$

Bevorzugt weist das resultierende Polyurethan (P) einen theoretischen Gehalt an Hydroxylgruppen von weniger als 0,24 Gew.-%, insbesondere bevorzugt von weniger als 0,22 Gew.-%, des Weiteren bevorzugt von weniger als 0,20 Gew.-%, des Weiteren bevorzugt von weniger als 0,18 Gew.-%, besonders bevorzugt von 0,00 bis 0,22 Gew.-% und ganz besonders bevorzugt von 0 Gew.-% bezogen auf das Gesamtgewicht des Polyurethans im getrockneten Zustand auf.

Erfindungsgemäß weist das resultierende Polyurethan (P) weniger als 0,1 Gew.-% Harnstoffgruppen, bezogen auf =N-(C=O)-N=, auf. Unter einer Harnstoffgruppe im Sinne der vorliegenden Erfindung wird bevorzugt eine $R^1R^2N$-(C=O)N-$R^3R^4$-Gruppe verstanden, wobei die Reste $R^1$ bis $R^4$ jeweils unabhängig voneinander Wasserstoff oder ein organischer Rest sind. Damit werden unter einer Harnstoffgruppe auch substituierte Harnstoffgruppen und deren Derivate verstanden.

Bevorzugt weist das Polyurethan (P) die Aufbaukomponenten des mindestens einen Prepolymers (A) und des mindestens Polyisocyanats (B) auf, wobei diese beiden Aufbaukomponenten ausschließlich über Urethan-Gruppen miteinander verknüpft sind.

Bei dem Polyisocyanat (B) handelt es sich bevorzugt um ein aromatisches Polyisocyanat. In einer anderen Ausführungsform handelt es sich bevorzugt um ein aliphatisches oder cycloaliphatisches Polyisocyanat. Wie bereits oben erläutert, wurde erfindungsgemäß überraschend festgestellt, dass selbst mit einer aliphatischen oder cycloaliphatischen Polyisocyanatkomponente (B) eine Kettenverlängerung in einer wirtschaftlich sinnvollen Zeit erzielt werden konnte.

Bevorzugt wird das mindestens eine Polyisocyanat (B) ausgewählt aus der Gruppe, bestehend aus aromatischen, araliphatischen, aliphatischen und cycloaliphatischen Polyisocyanatverbindungen mit einer NCO-Funktionalität von $\geq 2$, welche optional Iminooxadiazindion-, Isocyanurat-, Uretdion-, Urethan-, Allophanat-, Biuret-, Harnstoff-, Oxadiazintrion-, Oxazolidinon-, Acylharnstoff- und/oder Carbodiimid-Strukturen aufweisen können. Solche Polyisocyanatverbindungen sind dem Fachmann an sich bekannt. Sie können einzeln und in beliebigen Mischungen untereinander eingesetzt werden.

Beispiele geeigneter Polyisocyanate (B) sind Butylendiisocyanat, Hexamethylendiisocyanat (HDI), Isophorondiisocyanat (IPDI), 2,2,4- und/oder 2,4,4-Trimethylhexamethylendiisocyanat, Pentamethylendiisocyanat (PDI), die isomeren Bis(4,4'-isocyanatocyclohexyl)methane oder deren Mischungen beliebigen Isomerengehalts, Isocyanatomethyl-1,8-octandiisocyanat, 1,4-Cyclohexylendiisocyanat, 1,4-Phenylendiisocyanat, 2,4- und/oder 2,6-Toluylendiisocyanat, 1,3- und 1,4-Bis-(2-isocyanato-prop-2-yl)-benzol (TMXDI), 1,3-Bis(isocyanato-methyl)benzol (XDI), 1,5-Naphthylendiisocyanat, 2,4'- oder 4,4'-Diphenylmethandiisocyanat, Triphenylmethan-4,4',4"-triisocyanat oder Derivate basierend auf den vorstehend genannten Diisocyanaten mit Uretdion-, Isocyanurat-, Urethan-, Allophanat-, Biuret-, Iminooxadiazindion- und/oder Oxadiazintrionstruktur mit mehr als 2 NCO Gruppen. Als Beispiel für ein nicht-modifiziertes Polyisocyanat mit mehr als 2 NCO-Gruppen pro Molekül sei z.B. 4-Isocyanatomethyl-1,8-octandiisocyanat (Nonantriisocyanat) genannt. Bevorzugt handelt es sich bei (B) um Polyisocyanate oder Polyisocyanatgemische der vorstehend genannten Art mit ausschließlich aliphatisch und/oder cycloaliphatisch gebundenen Isocyanatgruppen. Besonders bevorzugt sind Hexamethylendiisocyanat, Isophorondiisocyanat, die isomeren Bis-(4,4'-isocyanatocyclohexyl)methan, Isomere des Toluoldiisocyanats, Diphenylmethandiisocyanat sowie deren Mischungen.

Besonders bevorzugt sind alle Verbindungen der mindestens einen Polyisocyanatverbindung (A4) von allen Polyisocyanaten des mindestens einen Polyisocyanats (B) verschieden. Dies bedeutet, dass wenn (A4) mehrere unterschiedliche Polyisocyanatverbindungen umfasst, sich diese alle von den als Polyisocyanat (B) verwendeten Verbindungen unterscheiden. Dies gilt auch für den Fall, wenn (A4) nur eine Polyisocyanatverbindung umfasst.

Der Schritt der Kettenverlängerung (siehe auch Verfahrensschritt (ii)) ist dem Fachmann bekannt. Besonders bevorzugt erfolgt dieser Schritt in einem inerten organischen Lösungsmittel, bevorzugt ein ketofunktionelles aliphatisches Lösungsmittel, welches bevorzugt ausgewählt wird aus Aceton und Butanon, das nicht nur zu Beginn der Herstellung, sondern auch gegebenenfalls in Teilen später zugegeben werden kann. Bevorzugt wird dazu das Prepolymer (A) zunächst in diesem Lösungsmittel gelöst. Ebenso bevorzugt kann die Lösung erwärmt werden. Dabei ist eine Erwärmung auf 25 bis 100 °C bevorzugt, besonders bevorzugt auf 40 bis 60 °C. Im Anschluss wird das mindestens eine Polyisocyanat (B) hinzugegeben.

Bei der Kettenverlängerung kann optional auch ein Katalysator für die Urethanisierungsreaktion verwendet werden. Diese Katalysatoren sind dem Fachmann an sich bekannt. Bevorzugt sind metallorganische Verbindungen wie z.B. Dibutylzinndilaurat oder zinnfreie Metallkomplexe wie beispielsweise Borchi® Kat 24 der Firma OMG Borchers, Langenfeld.

Die Kettenverlängerung wird bis zum gewünschten OH-Gehalt durchgeführt. Dies bedeutet bevorzugt, dass die Reaktion so lange durchgeführt wird bis im Wesentlichen alle NCO-Gruppen verbraucht sind (d. h. keine NCO-Gruppen mehr nachweisbar sind). Dem Fachmann sind Methoden zum Nachweis von NCO-Gruppen bekannt. Bevorzugt sind mittels FT-IR-Analyse keine NCO-Gruppen mehr nachweisbar. Bevorzugt wird dazu eine Reaktionszeit von 20 bis 750 min, besonders bevorzugt von 60 bis 500 min benötigt.

Bevorzugt wird bei der Kettenverlängerung ein Kettenverlängerungsgrad von 80 bis 100 %, besonders bevorzugt von 90 bis 100 %, ganz besonders bevorzugt von 95 bis 100 % erzielt. Der Kettenverlängerungsgrad ergibt sich aus dem molaren Verhältnis der eingesetzten NCO-Gruppen des mindestens einen Polyisocyanats (B) zu den eingesetzten OH-Gruppen des Prepolymers (A) multipliziert mit 100 (Kettenverlängerungsgrad = ([eingesetzte NCO-Gruppen in mol]/[eingesetzte OH-Gruppen in mol])*100).

Sollte das Prepolymer (A) potentiell ionische Gruppen in der optionalen Aufbaukomponente (A3) enthalten, so sollten diese optional vor der Dispergierung in Wasser neutralisiert werden. Diese Neutralisation kann entweder bereits im Prepolymer (A) d. h. vor dem erfindungsgemäßen Verfahrensschritt (ii), oder im Polyurethan (U) selbst, d. h. nach dem erfindungsgemäßen Verfahrensschritt (ii), erfolgen. Daher umfasst der erfindungsgemäße Verfahrensschritt (iii) gegebenenfalls die Neutralisation der potentiell ionischen Gruppe der optionalen Aufbaukomponente (A3) vor oder nach Verfahrensschritt (ii).

Geeignete Neutralisationsmittel sind dem Fachmann bekannt. Sie können beispielsweise ausgewählt werden aus der Gruppe, bestehend aus Triethylamin, N-Methylmorpholin, Dimethylisopropylamin, Ethyldiisopropylamin, Dimethylcylohexylamin, Triethanolamin, Dimethylethanolamin, Ammoniak, Kaliumhydroxid, Natriumhydroxid und beliebigen Mischungen davon.

Dabei wird bevorzugt ein Neutralisationsgrad von mindestens 60 %, besonders bevorzugt von mindestens 75 %, ganz besonders bevorzugt von 100 % erzielt.

Das so erhaltene Polyurethan (P) wird im Anschluss in Wasser dispergiert, um die erfindungsgemäße wässrige Polyurethan-Dispersion zu erhalten. Der erfindungsgemäße Verfahrensschritt (iv) sieht daher die Dispergierung des aus Schritt (ii) oder (iii) erhaltenen Polyurethans (P) in Wasser vor. Die Dispergierung des aus Schritt (ii) erhaltenen Polyurethans erfolgt entweder, wenn keine Neutralisation in Verfahrensschritt (iii) durchgeführt wird oder wenn Verfahrensschritt (iii) vor Verfahrensschritt (ii) durchgeführt wird. Die Dispergierung des aus Schritt (iii) erhaltenen Polyurethans erfolgt, wenn in Verfahrensschritt (iii) nach Verfahrensschritt (ii) eine Neutralisation durchgeführt wird.

Zur Durchführung des Dispergierschrittes kann entweder Wasser zum Polyurethan (P) gegeben werden oder das Polyurethan (P) zu dem Wasser gegebenen werden. Hierbei kann jeweils das lösungsmittelfreie Polyurethan (P) oder seine Lösung in einem inerten Lösungsmittel vorzugsweise Aceton verwendet werden. Der Dispergierschritt erfolgt im Allgemeinen innerhalb des Temperaturbereichs von 20 bis 100 °C, vorzugsweise 40 bis 100 °C. Die Dispergierbarkeit des Polyurethans (P) kann gegebenenfalls durch Mitverwendung von externen Emulgatoren beim Dispergieren verbessert werden. Die Dispergierung erfolgt gegebenenfalls unter starker Scherung.

Das in den Dispersionen nach dem Dispergierschritt noch enthaltene Lösemittel wird üblicherweise anschließend destillativ entfernt. Eine Entfernung bereits während der Dispergierung ist ebenfalls möglich. Die gegebenenfalls durchgeführte destillative Entfernung überschüssiger Lösemittelmengen kann z.B. unter reduziertem Druck bei z.B. 20 bis 80°C während oder nach dem Dispergieren in/mit destilliertem Wasser erfolgen.

Erfindungsgemäß ist die Dispersion wässrig. Dies bedeutet bevorzugt, dass sie im Wesentlichen kein organisches Lösungsmittel mehr enthält. Der Restgehalt an organischem Lösungsmittel ist bevorzugt unter 5 Gew.-%, besonders bevorzugt unter 3 Gew.-% und ganz besonders bevorzugt unter 1 Gew.-% des Gesamtgewichts der Polyurethan-Dispersion.

Den erfindungsgemäßen Dispersionen können im Anschluss an ihre Herstellung zur Erzielung bestimmter Eigenschaften organische Lösungsmittel, insbesondere alkoholische Lösungsmittel wie beispielsweise Ethanol, n-Butanol, n-Octanol, Butyldiglykol, Ethyldiglykol, Methyldiglykol oder Methoxypropanol zugesetzt werden.

Der Feststoffgehalt der erfindungsgemäßen Polyurethan-Dispersion liegt bevorzugt zwischen 22 bis 55 Gew.-% und besonders bevorzugt zwischen 30 bis 50 Gew.-%.

Die erfindungsgemäße Polyurethan-Dispersion weist zudem bevorzugt einen pH-Wert von 5,0 bis 8,0, besonders bevorzugt von 5,5 bis 7,9 auf.

Die erfindungsgemäße Polyurethan-Dispersion weist bevorzugt mittlere Teilchendurchmesser, bestimmt z.B. durch Photokorrelations-Spektroskopie, von 50 bis 500 nm, bevorzugt von 60 bis 300 nm auf. Dabei wird Wasser als Lösungsmittel verwendet und die Messung findet bei 25 °C statt. Bei den mittleren Teilchengrößen handelt es sich jeweils um den D50-Wert des Z-Mittels.

Besonders bevorzugt weist das Polyurethan (P) der Dispersion ein gewichtsmittleres Molekulargewicht von 10.000 bis 500.000 g/mol, besonders bevorzugt von 15.000 bis 400.000 g/mol und ganz besonders bevorzugt von 20.000 bis 300.000g/mol. Das gewichtsmittlere Molekulargewicht wird im Rahmen dieser Anmeldung bevorzugt bestimmt durch Gelpermeationschromatographie (GPC) in N,N-Dimethylacetamid bei 40°C. Es wird dabei vorgegangen nach DIN 55672-2 (2008-06): "Gelpermeationschromatographie, Teil 2 - N,N-Dimethylacetamid als Elutionsmittel" (SECurity GPC-System von PSS Polymer Service, Flussrate 0,6 ml/min; Säulen: GRAM 3000, HEMA 300, 2x HEMA 40; UV- und RI-Detektor). Dabei werden Polystyrolproben bekannter Molmasse zur Kalibrierung verwendet. Die Berechnung des zahlenmittleren Molekulargewichts erfolgt softwaregestützt. Basislinienpunkte und Auswertegrenzen werden entsprechend der DIN 55672 Teil 2(2008-06) festgelegt.

Erfindungsgemäß hat sich herausgestellt, dass die Polyurethan-Dispersionen Kennwerte wie beispielsweise Festkörpergehalt, pH-Wert und/oder mittlerer Teilchendurchmesser aufweisen, die vergleichbar sind zu üblichen Polyurethanharnstoff-Dispersionen. Dies bedeutet, dass die erfindungsgemäßen Polyurethan-Dispersionen ebenso verwendet werden können wie die bekannten Dispersionen, dabei jedoch eine vereinfachte Prozessführung und eine bessere Kontrolle über die resultierenden Produkte erhalten werden.

Allgemein kann die erfindungsgemäße wässrige Polyurethan-Dispersion zur Herstellung von Lacken, Beschichtungen, Klebstoffen oder Dichtstoffen verwendet werden.

In einem weiteren Aspekt der vorliegenden Erfindung wird ein wässriges 1-Komponenten-Beschichtungsmittel bereitgestellt, enthaltend

(Ia) mindestens eine erfindungsgemäße wässrige Polyurethan-Dispersion in sämtlichen beschriebenen bevorzugten Ausführungsformen, gegebenenfalls in Mischung mit weiteren Dispersionen,

(IIa) gegebenenfalls mindestens ein blockiertes Polyisocyanat und

(IIIa) mindestens einen Hilfs- und/oder Zusatzstoff.

Solche 1-Kompontenten-Beschichtungsmittel sind z.B. Einbrennlacke und -beschichtungen, die bei Temperaturen von 120 bis 230°C ausgehärtet werden. Besonders bevorzugte Verwendungen sind dabei Einbrennfüllerlackierungen, Einschichtlacke, Steinschlagschutzgrundierungen und pigmentierte Decklacke.

Die gegebenenfalls anderen Dispersionen der Komponente (Ia) können ebenfalls Polyurethane sein oder aber auch andere für den Fachmann gängige Dispersionen.

Geeignete blockierte Polyisocyanate (IIa) sind z.B. Umsetzungsprodukte von difunktionellen Isocyanaten wie z.B. Isophorondiisocyanat, Hexamethylendiisocyanat, 2,4- bzw. 2,6-Diisocyanatotoluol, 4.4'-Diphenylmethandiisocyanat und/oder deren höhermolekularen Trimere, Biurete, Urethane, Iminooxadiazindion und/oder Allophanate mit Blockierungsmittel wie z.B. Methanol, Ethanol, Butanol, Hexanol, Benzylakohol, Acetoxim, Butanonoxim, Caprolactam, Phenol, Diethylmalonat, Dieethylmalonat, Dimethylpyrazol, Triazol, Dimethyltriazol, Acetessigester, Diisopropylamin, Dibutylamin, tert.-Butylbenzylamin, Cyclopentanoncarboxyethylester, Dicyclohexylamin und/oder tert.-Butylisopropylamin.

Die genannten blockierten Polyisocyanate können auch durch Einbau hydrophiler Gruppen, wie z.B. Carboxylat-, Sulphonat- und/oder Polyethylenoxidstrukturen in eine wasserdispergierbare Form überführt werden und so in Kombination mit den erfindungsgemäßen Dispersionen eingesetzt werden. Die genannten blockierten Polyisocyanate können auch unter Mitverwendung hydroxy- bzw. aminofunktioneller, auch höhermolekularere Komponenten, wie z.B.

Diole, Triole, Aminoalkohole, Polyester, Polyether, Polycarbonate und Mischungen der genannten und/oder anderer Rohstoffe hergestellt werden.

Die blockierten Polyisocyanate (IIa) weisen bevorzugt eine (mittlere) NCO-Funktionalität von 2,0 bis 5,0, bevorzugt von 2,3 bis 4,5, einen Gehalt an Isocyanatgruppen (unblockiert und blockiert) von 5,0 bis 27,0 Gew.-%, bevorzugt von 14,0 bis 24,0 Gew.-% und einen Gehalt an monomeren Diisocyanaten von weniger als 1 Gew.-%, bevorzugt weniger als 0,5 Gew.-% auf. Die Isocyanatgruppen der Polyisocyanate der wasserdispergierbaren bzw. wasserlöslichen blockierten Polyisocyanate liegen zu mindestens 50 %, bevorzugt zu mindestens 60 % und besonders bevorzugt zu mindestens 70 % in blockierter Form vor. Die Herstellung der wasserdispergierbaren, blockierten Polyisocyanate IIa kann nach bekannten Methoden des Standes der Technik (z.B. in der DE-A 2 456 469, Spalte 7-8, Beispiel 1-5 und DE-A 2 853 937 S. 21-26, Beispiel 1-9) erfolgen.

Geeignete Hilfs- oder Zusatzstoffe (IIIa) zur Formulierung von 1-Komponenten-Beschichtungsmitteln sind dem Fachmann bekannt. Dabei handelt es sich z.B. um oberflächenaktive Substanzen, Emulgatoren, Stabilisatoren, Antiabsetzmittel, UV-Stabilisatoren, Katalysatoren für die Vernetzungsreaktion, Entschäumer, Antioxidantien, Hautverhinderungsmittel, Verlaufshilfsmittel, Verdicker und/oder Bakterizide.

In einem weiteren Aspekt der vorliegenden Erfindung wird ein wässriges 2-Komponenten-Beschichtungsmittel bereitgestellt, enthaltend

(Ib) mindestens eine erfindungsgemäße wässrige Polyurethan-Dispersion in sämtlichen beschriebenen bevorzugten Ausführungsformen, gegebenenfalls in Mischung mit weiteren Dispersionen,

(IIb) mindestens ein Polyisocyanat (C) und

(IIIb) mindestens einen Hilfs- und/oder Zusatzstoff.

Die gegebenenfalls anderen Dispersionen der Komponente (Ib) können ebenfalls Polyurethane sein oder aber auch andere für den Fachmann gängige Dispersionen.

Geeignete Hilfs- oder Zusatzstoffe (IIIb) zur Formulierung von 2-Komponenten-Beschichtungsmitteln sind dem Fachmann bekannt. Dabei handelt es sich z.B. um oberflächenaktive Substanzen, Emulgatoren, Stabilisatoren, Antiabsetzmittel, UV-Stabilisatoren, Katalysatoren für die Vernetzungsreaktion, Entschäumer, Antioxidantien, Hautverhinderungsmittel, Verlaufshilfsmittel, Verdicker und/oder Bakterizide.

Ebenso wird in einem Aspekt der vorliegenden Erfindung ein Lack, Beschichtung, Klebstoff oder Dichtstoff bereitgestellt, der durch Härtung der erfindungsgemäßen wässrigen Polyurethan-Dispersion in sämtlichen beschriebenen bevorzugten Ausführungsformen auf zumindest einem Teil eines Substrats erhalten wird. Die Härtung kann erfindungsgemäß bevorzugt durch Trocknung und gegebenenfalls zusätzlicher chemischer Vernetzung erfolgen.

Die Erfindung soll anhand der nachfolgenden Beispiele näher erläutert werden.

**Beispiele**

**<u>Rohstoffe:</u>**

Desmophen 1652 (DE 1652): Polyesterpolyol aus Adipinsäure, 1,4-Butandiol, Ethylenglykol, Diethylenglykol mit einer Molmasse von 2000 g/mol (BAYER AG, Leverkusen)

Polyethersulfonat (PETS): Polypropylenoxid-Diol mit Natriumsulfonatgruppe und einer Molmasse von 435 g/mol (BAYER AG, Leverkusen)

PTHF2K: Polytetramethylenoxid-Diol mit einer Molmasse von 2000 g/mol (ALDRICH, DE).

C2200: Polyhexamethylencarbonat-Diol mit einer Molmasse von 2000 g/mol (BAYER AG, Leverkusen)

1,4-Butandiol (BDO): (ALDRICH, DE)

LB 25: Monohydroxy-funktioneller Polyether aus Ethylenoxid und Propylenoxid mit einem Gewichtsanteil von 84% Ethylenoxid und einer Molmasse von 2250 g/mol (BAYER AG, Leverkusen)

Desmodur I (IPDI): Isophorondiisocyanat (BAYER AG, Leverkusen)

Desmodur H (HDI): Hexamethylendiisocyanat (BAYER AG, Leverkusen)

Desmodur T 80 (T80): Toluoldiisocyanat (80% Toluol-2,4-diisocyanat und 20% Toluol-2,6-diisocyanat, BAYER AG, Leverkusen)

Desmodur T 100 (T100): Toluoldiisocyanat (100% Toluol-2,4-diisocyanat, BAYER AG Leverkusen)

Desmodur 2460 M (MDI): Diphenylmethandiisocyanat (Isomerengemisch aus 2,4'- und 4,4'-Diphenylmethandiisocyanat, BAYER AG Leverkusen)

DMPS: Dimethylolpropansäure (DMPS, ALDRICH, DE)

TEA: Triethylamin (ALDRICH, DE)

Borchikat 24: Zinnfreier Urethanisierungskatalysator (OMG Borchers, Langenfeld, DE)

**Methoden:**

Die Bestimmung der Viskosität erfolgte mittels eines Haake-Viskosimeters bei Raumtemperatur (23 °C) und einer Scherrate von 45 s-1.

Die Bestimmung der Festkörpergehalte (FK) erfolgte nach DIN-EN ISO 3251.

Die mittleren Teilchengrößen (MTG) wurden mittels Photokorrelations-Spektroskopie ermittelt (Malvern Instruments, Typ: Zetasizer 1000)

**Herstellung der Dispersionen:**

**Allgemeine Vorschrift zur Herstellung der erfindungsgemäßen Dispersionen**

Die entsprechende Menge der OH-funktionellen Rohstoffe werden in einem Reaktionsgefäß vorgelegt und auf eine Temperatur von 70 °C aufgeheizt. Nach Erreichen der Zieltemperatur wird die angegebene Menge des Polyisocyanats 1 zugegeben, auf 100 °C erwärmt und so lange gerührt bis mittels IR-Messung kein freies Isocyanat mehr zu erkennen ist. Das Präpolymer wird auf 50 °C abgekühlt und anschließend in Aceton gelöst (50%ige Lösung). Es erfolgt die Zugabe des Polyisocyanats 2 sowie 200 ppm des Urethanisierungskatalysators Borchikat 24. Die Kettenverlängerung erfolgt unter Rückfluss in der angegebenen Reaktionszeit (t KV) und der Umsatz wird in regelmäßigen Abständen mittels IR überprüft bis der Reaktionsansatz kein freies Isocyanat mehr aufweist. Danach wird auf 50 °C abgekühlt und es wird vollentsalztes Wasser zur Dispergierung zugefügt (Menge ist so berechnet, dass die acetonfreie PUD einen theoretischen Festkörper von 35,0 Gew% aufweist). Danach wird das Aceton unter reduziertem Druck (125 mbar) bei 45 °C abdestilliert und man erhält eine hochmolekulare, harnstoffgruppen- und lösemittelfreie Polyurethandispersion.

| | OH-funktionell | | | | OH (PUD) / Gew% | NCO-funktionell | | T KV /min |
|---|---|---|---|---|---|---|---|---|
| Bsp. | Polyol / g | BDO / g | Hydropil / g | LB25 / g | | Isocyanat 1 / g | Isocyanat 2 / g | |
| 1 | DE 1652 158,5 | 25,9 | PETS 27,2 | 11,3 | 0 | IPDI 47,2 | T80 37,4 | 190 |
| 2 | PTHF2K 239,6 | 15,3 | PETS 21,8 | 9,0 | 0 | IPDI 37,7 | T80 29,9 | 195 |
| 3 | C2200 239,6 | 15,3 | PETS 21,8 | 9,0 | 0 | IPDI 37,7 | T80 29,9 | 205 |
| 4 | DE 1652 254,0 | 15,3 | PETS 21,8 | 9,0 | 0 | IPDI 37,7 | MDI 47,1 | 460 |
| 5 | DE 1652 254,4 | 15,3 | PETS 21,8 | / | 0 | IPDI 37,7 | T80 29,9 | 190 |
| 6 | DE 1652 292,0 | 33,8 | / | / | 0 | IPDI 16,7 | T80 12,4 | 90 |
| 7 | DE 1652 292,6 | / | / | 33,8 | 0 | IPDI 16,7 | HDI 10,7 | 120 |
| 8 | DE 1652 292,6 | / | / | 33,8 | 0 | IPDI 16,7 | IPDI 14,1 | 120 |
| 9 | DE 1652 254,2 | 15,3 | PETS 21,8 | 4,5 | 0 | IPDI 37,7 | HDI 28,5 | 195 |
| 10 | DE 1652 254,2 | 15,3 | PETS 21,8 | 4,5 | 0 | IPDI 42,2 | T80 26,4 | 180 |
| 11 | DE 1652 254,2 | 15,3 | PETS 21,8 | 4,5 | 0 | IPDI 47,2 | T80 22,4 | 390 |

(fortgesetzt)

| Bsp. | OH-funktionell | | | | NCO-funktionell | | | |
| | Polyol / g | BDO / g | Hydropil / g | LB25 / g | OH (PUD) / Gew% | Isocyanat 1 / g | Isocyanat 2 / g | T KV /min |
|---|---|---|---|---|---|---|---|---|
| 12 | DE 1652 254,2 | 15,3 | PETS 21,8 | 4,5 | 0 | IPDI 53,9 | T80 17,1 | 420 |
| 13 | DE 1652 254,0 | 15,3 | PETS 21,8 | 9,0 | 0 | IPDI 37,7 | T100 29,9 | 360 |
| 14 | DE 1652 177,9 | 15,3 | DMPS* 11,5 | 4,5 | 0 | IPDI 37,7 | T80 29,9 | 150 |
| 15 | DE 1652 158,5 | 25,9 | PETS 27,2 | 11,3 | 0,22 | IPDI 47,2 | T80 34,4 | 255 |
| * Präpolymer wird nach Lösen in Aceton mit Triethylamin neutralisiert; Neutralisationsgrad entspricht 100% | | | | | | | | |

| Bsp. | FK / Gew% | pH | Viskosität / mPas | MTG / nm |
|---|---|---|---|---|
| 1 | 36,3 | 7,2 | 55 | 100 |
| 2 | 36,4 | 7,2 | 80 | 195 |
| 3 | 35,4 | 6,2 | 30 | 145 |
| 4 | 33,8 | 6,3 | 30 | 255 |
| 5 | 35,4 | 7,5 | 20 | 370 |
| 6 | 35,3 | 5,5 | 20 | 225 |
| 7 | 37,1 | 5,8 | 15 | 130 |
| 8 | 35,4 | 6,4 | 20 | 140 |
| 9 | 33,9 | 6,9 | 10 | 295 |
| 10 | 34,6 | 7,0 | 20 | 105 |
| 11 | 35,0 | 6,1 | 40 | 95 |
| 12 | 37,2 | 6,2 | 45 | 110 |
| 13 | 34,4 | 5,8 | 25 | 150 |
| 14 | 34,9 | 7,9 | 1400 | 120 |
| 15 | 34,4 | 6,0 | 135 | 55 |

Man erkennt, dass die erfindungsgemäßen Polyurethandispersionen Kennwerte aufweisen, die vergleichbar sind zu üblichen Polyurethanharnstoffdispersionen. Dabei ist es möglich anionische oder nicht-ionische bzw. auch kombiniert anionisch-nichtionische Partikel zu erzeugen. Die anionischen Gruppen liegen als Sulfonat- oder Carboxylatgruppen vor.

## Patentansprüche

1. Wässrige Polyurethan-Dispersion, enthaltend das Polyurethan (P), wobei das Polyurethan (P) hergestellt wird durch Kettenverlängerung mindestens eines hydroxyfunktionellen Prepolymers (A) mit mindestens einem Polyisocyanat (B), wobei das hydroxyfunktionelle Prepolymer (A) mindestens die folgenden Aufbaukomponenten umfasst:

(A1) mindestens ein Polyol mit einer Funktionalität > 1,
(A2) gegebenenfalls mindestens ein Diol, welches von (A1) verschieden ist,

(A3) gegebenenfalls mindestens eine hydrophile Aufbaukomponente, welche mindestens eine hydrophile Gruppe, welche ausgewählt wird aus der Gruppe, bestehend aus einer ionischen Gruppe, einer potentiell ionischen Gruppe, einer nicht-ionischen Gruppe und beliebigen Mischungen daraus, und mindestens eine Hydroxylgruppe aufweist, und

(A4) mindestens eine Polyisocyanatverbindung,

und wobei das Polyurethan (P) weniger als 0,1 Gew.-% Harnstoffgruppen, bezogen auf =N-(C=O)-N=, aufweist, **dadurch gekennzeichnet, dass** das Polyurethan (P) einen theoretischen Gehalt an Hydroxylgruppen von weniger als 0,25 Gew.-% bezogen auf das Gesamtgewicht des Polyurethans im getrockneten Zustand aufweist.

2. Verfahren zur Herstellung einer wässrigen Polyurethan-Dispersion, umfassend die folgenden Schritte in der angegebenen Reihenfolge:

(i) Herstellung eines hydroxyfunktionellen Prepolymers (A) aus mindestens den folgenden Aufbaukomponenten:

(A1) mindestens ein Polyol mit einer Funktionalität > 1,
(A2) gegebenenfalls mindestens ein Diol, welches von (A1) verschieden ist,
(A3) gegebenenfalls mindestens eine hydrophile Aufbaukomponente, welche mindestens eine hydrophile Gruppe, welche ausgewählt wird aus der Gruppe, bestehend aus einer ionischen Gruppe, einer potentiell ionischen Gruppe, einer nicht-ionischen Gruppe und beliebigen Mischungen daraus, und mindestens eine Hydroxylgruppe aufweist, und
(A4) mindestens eine Polyisocyanatverbindung,

(ii) Kettenverlängerung des aus Schritt (i) erhaltenen hydroxyfunktionellen Prepolymers mit mindestens einem Polyisocyanat (B) zu einem Grad, dass das resultierende Polyurethan (P) einen theoretischen Gehalt an Hydroxylgruppen von weniger als 0,25 Gew.-% bezogen auf das Gesamtgewicht des Polyurethans im getrockneten Zustand aufweist, und wobei das resultierende Polyurethan (P) weniger als 0,1 Gew.-% Harnstoffgruppen, bezogen auf =N-(C=O)-N=, aufweist,
(iii) gegebenenfalls Neutralisation der potentiell ionischen Gruppe der optionalen Aufbaukomponente (A3) vor oder nach Schritt (ii), und
(iv) Dispergierung des aus Schritt (ii) oder (iii) erhaltenen Polyurethans (P) in Wasser.

3. Wässrige Polyurethan-Dispersion nach Anspruch 1 oder Verfahren nach Anspruch 2, wobei das Polyurethan (P) einen theoretischen Gehalt an Hydroxylgruppen von weniger oder gleich 0,24 Gew.-% bezogen auf das Gesamtgewicht des Polyurethans im getrockneten Zustand aufweist.

4. Wässrige Polyurethan-Dispersion nach einem der Ansprüche 1 oder 3 oder Verfahren nach einem der Ansprüche 2 oder 3, wobei das Polyisocyanat (B) ein aromatisches Polyisocyanat ist.

5. Wässrige Polyurethan-Dispersion nach einem der Ansprüche 1, 3 oder 4 oder Verfahren nach einem der Ansprüche 2 bis 4, wobei alle Verbindungen der mindestens einen Polyisocyanatverbindung (A4) von allen Polyisocyanaten des mindestens einen Polyisocyanats (B) verschieden sind.

6. Wässrige Polyurethan-Dispersion nach einem der Ansprüche 1 oder 3 bis 5 oder Verfahren nach einem der Ansprüche 2 bis 5, wobei bei der Herstellung des hydroxyfunktionellen Prepolymers (A) ein molares Verhältnis von Isocyanatgruppen zu gegenüber Isocyanat reaktiven Gruppe von 0,25 bis 0,95 vorliegt.

7. Wässrige Polyurethan-Dispersion nach einem der Ansprüche 1 oder 2 bis 6 oder Verfahren nach einem der Ansprüche 2 bis 6, wobei bei der Kettenverlängerung ein Kettenverlängerungsgrad von 80 bis 100 % erzielt wird.

8. Wässrige Polyurethan-Dispersion nach einem der Ansprüche 1 oder 3 bis 7 oder Verfahren nach einem der Ansprüche 2 bis 7, wobei das hydroxyfunktionelle Prepolymer (A) mindestens die folgenden Aufbaukomponenten umfasst:

(A1) mindestens ein Polyol mit einer Funktionalität > 1, welches ausgewählt wird aus der Gruppe, bestehend aus einem Polyesterpolyol, Polyetherpolyol, Polyesteretherpolyol und einem Polycarbonatpolyol,
(A2) gegebenenfalls mindestens ein Diol, welches von (A1) verschieden ist und eine Molmasse von 62 bis 450 g/mol aufweist,

(A3) gegebenenfalls mindestens eine hydrophile Aufbaukomponente, welche mindestens eine hydrophile Gruppe, welche ausgewählt wird aus der Gruppe, bestehend aus einer Säuregruppe, Polyoxyalkylenethergruppe und beliebigen Mischungen daraus, und mindestens eine Hydroxylgruppe aufweist, und

(A4) mindestens eine Polyisocyanatverbindung, welche ausgewählt wird aus der Gruppe, bestehend aus aromatischen, araliphatischen, aliphatischen und cycloaliphatischen Polyisocyanatverbindungen mit einer NCO-Funktionalität von ≥ 2, welche optional Iminooxadiazindion-, Isocyanurat-, Uretdion-, Urethan-, Allophanat-, Biuret-, Harnstoff-, Oxadiazintrion, Oxazolidinon-, Acylharnstoff- und/oder Carbodiimid-Strukturen aufweisen können.

9. Wässrige Polyurethan-Dispersion nach einem der Ansprüche 1 oder 3 bis 8 oder Verfahren nach einem der Ansprüche 2 bis 8, wobei die hydrophile Aufbaukomponente (A3) zumindest die folgenden Verbindungen umfasst:

(A3-1) mindestens eine ionische oder potentiell ionische Verbindung mit mindestens einer Säuregruppe und mindestens einer Hydroxylgruppe und

(A3-2) mindestens eine Polyethylenglykol-haltige Verbindung, deren Anteil an Polyethylenglykol mindestens 50 Gew.-% beträgt, die eine Molmasse Mn von 1200 g/mol bis 3000 g/mol und eine Hydroxylgruppe aufweist.

10. Wässrige Polyurethan-Dispersion nach einem der Ansprüche 1 oder 3 bis 9 oder Verfahren nach einem der Ansprüche 2 bis 9, wobei das hydroxyfunktionelle Prepolymer (A) zumindest

50 bis 87 Gew.-% an (A1),
3 bis 11 Gew.-% an (A2),
0 bis 24 Gew.-% an (A3) und
3 bis 20 Gew.-% an (A4) umfasst,

wobei die Summe der Aufbaukomponenten (A1) bis (A4) 100 Gew.-% ergibt.

11. Wässrige Polyurethan-Dispersion nach einem der Ansprüche 1 oder 3 bis 10 oder Verfahren nach einem der Ansprüche 2 bis 10, wobei die wässrige Polyurethan-Dispersion einen Feststoffgehalt von 20 bis 55 Gew.-% aufweist.

12. Wässriges 1-Komponenten-Beschichtungsmittel, enthaltend

(Ia) mindestens eine wässrige Polyurethan-Dispersion nach einem der Ansprüche 1 oder 3 bis 11, gegebenenfalls in Mischung mit weiteren Dispersionen,
(IIa) gegebenenfalls mindestens ein blockiertes Polyisocyanat und
(IIIa) mindestens einen Hilfs- und/oder Zusatzstoff.

13. Wässriges 2-Komponenten-Beschichtungsmittel, enthaltend

(Ib) mindestens eine wässrige Polyurethan-Dispersion nach einem der Ansprüche 1 oder 3 bis 11, gegebenenfalls in Mischung mit weiteren Dispersionen,
(IIb) mindestens ein Polyisocyanat (C) und
(IIIb) mindestens einen Hilfs- und/oder Zusatzstoff.

14. Verwendung der wässrigen Polyurethandispersion nach einem der Ansprüche 1 oder 3 bis 11 zur Herstellung von Lacken, Beschichtungen, Klebstoffen oder Dichtstoffen.

15. Lack, Beschichtung, Klebstoff oder Dichtstoff, erhalten durch Härtung der wässrigen Polyurethandispersion nach einem der Ansprüche 1 oder 3 bis 11 auf zumindest einem Teil eines Substrats.

**Claims**

1. Aqueous polyurethane dispersion comprising the polyurethane (P), the polyurethane (P) being prepared by chain extension of at least one hydroxy-functional prepolymer (A) with at least one polyisocyanate (B), the hydroxy-functional prepolymer (A) comprising at least the following formation components:

(A1) at least one polyol having a functionality > 1,

(A2) optionally at least one diol other than (A1),
(A3) optionally at least one hydrophilic formation component having at least one hydrophilic group which is selected from the group consisting of an ionic group, a potentially ionic group, a nonionic group and any desired mixtures thereof, and at least one hydroxyl group, and
(A4) at least one polyisocyanate compound,

and the polyurethane (P) having less than 0.1% by weight of urea groups based on =N-(C=O)-N=, **characterized in that** the polyurethane (P) has a theoretical content of hydroxyl groups of less than 0.25% by weight, based on the total weight of the polyurethane in the dried state.

2. Process for preparing an aqueous polyurethane dispersion, comprising the following steps in the sequence specified:

(i) preparing a hydroxy-functional prepolymer (A) from at least the following formation components:

(A1) at least one polyol having a functionality > 1,
(A2) optionally at least one diol other than (A1),
(A3) optionally at least one hydrophilic formation component having at least one hydrophilic group which is selected from the group consisting of an ionic group, a potentially ionic group, a nonionic group and any desired mixtures thereof, and at least one hydroxyl group, and
(A4) at least one polyisocyanate compound,

(ii) chain-extending the hydroxy-functional prepolymer obtained from step (i) with at least one polyisocyanate (B) to such a degree that the resulting polyurethane (P) has a theoretical content of hydroxyl groups of less than 0.25% by weight, based on the total weight of the polyurethane in the dried state, the resulting polyurethane (P) having less than 0.1% by weight of urea groups based on =N-(C=O)-N=,
(iii) optionally neutralizing the potentially ionic group in the optional formation component (A3) before or after step (ii), and
(iv) dispersing the polyurethane (P) obtained from step (ii) or (iii) in water.

3. Aqueous polyurethane dispersion according to Claim 1 or process according to Claim 2, wherein the polyurethane (P) has a theoretical content of hydroxyl groups of not more than 0.24% by weight, based on the total weight of the polyurethane in the dried state.

4. Aqueous polyurethane dispersion according to either of Claims 1 and 3 or process according to either of Claims 2 and 3, wherein the polyisocyanate (B) is an aromatic polyisocyanate.

5. Aqueous polyurethane dispersion according to any of Claims 1, 3 and 4 or process according to any of Claims 2 to 4, wherein all the compounds in the at least one polyisocyanate compound (A4) are different from all the polyisocyanates in the at least one polyisocyanate (B).

6. Aqueous polyurethane dispersion according to any of Claims 1 and 3 to 5 or process according to any of Claims 2 to 5, wherein there is a molar ratio of isocyanate groups to isocyanate-reactive group in the preparation of the hydroxy-functional prepolymer (A) of 0.25 to 0.95.

7. Aqueous polyurethane dispersion according to any of Claims 1 and 2 to 6 or process according to any of Claims 2 to 6, wherein the chain extension achieves a degree of chain extension of 80% to 100%.

8. Aqueous polyurethane dispersion according to any of Claims 1 and 3 to 7 or process according to any of Claims 2 to 7, wherein the hydroxy-functional prepolymer (A) comprises at least the following formation components:

(A1) at least one polyol having a functionality > 1 selected from the group consisting of a polyester polyol, polyether polyol, polyester ether polyol and polycarbonate polyol,
(A2) optionally at least one diol other than (A1) and having a molar mass of 62 to 450 g/mol,
(A3) optionally at least one hydrophilic formation component having at least one hydrophilic group which is selected from the group consisting of an acid group, polyoxyalkylene ether group and any desired mixtures thereof, and at least one hydroxyl group, and
(A4) at least one polyisocyanate compound which is selected from the group consisting of aromatic, araliphatic, aliphatic and cycloaliphatic polyisocyanate compounds having an NCO functionality of $\geq 2$, which may optionally have iminooxadiazinedione, isocyanurate, uretdione, urethane, allophanate, biuret, urea, oxadiazinetrione, oxazolidinone, acylurea and/or carbodiimide structures.

9. Aqueous polyurethane dispersion according to any of Claims 1 and 3 to 8 or process according to any of Claims 2 to 8, wherein the hydrophilic formation component (A3) comprises at least the following compounds:

(A3-1) at least one ionic or potentially ionic compound having at least one acid group and at least one hydroxyl group and
(A3-2) at least one polyethylene glycol-containing compound wherein the proportion of polyethylene glycol is at least 50% by weight, having a molar mass Mn of 1200 g/mol to 3000 g/mol and a hydroxyl group.

10. Aqueous polyurethane dispersion according to any of Claims 1 and 3 to 9 or process according to any of Claims 2 to 9, wherein the hydroxy-functional prepolymer (A) comprises at least

50% to 87% by weight of (A1),
3% to 11% by weight of (A2),
0% to 24% by weight of (A3) and
3% to 20% by weight of (A4),

where the sum total of formation components (A1) to (A4) adds up to 100% by weight.

11. Aqueous polyurethane dispersion according to any of Claims 1 and 3 to 10 or process according to any of Claims 2 to 10, wherein the aqueous polyurethane dispersion has a solids content of 20% to 55% by weight.

12. Aqueous one-component coating composition comprising

(Ia) at least one aqueous polyurethane dispersion according to any of Claims 1 and 3 to 11, optionally in a mixture with further dispersions,
(IIa) optionally at least one blocked polyisocyanate and
(IIIa) at least one auxiliary and/or additive.

13. Aqueous two-component coating composition comprising

(Ib) at least one aqueous polyurethane dispersion according to any of Claims 1 and 3 to 11, optionally in a mixture with further dispersions,
(IIb) at least one polyisocyanate (C) and
(IIIb) at least one auxiliary and/or additive.

14. Use of the aqueous polyurethane dispersion according to any of Claims 1 and 3 to 11 for production of paints, coatings, adhesives or sealants.

15. Paint, coating, adhesive or sealant obtained by curing the aqueous polyurethane dispersion according to any of Claims 1 and 3 to 11 on at least part of a substrate.

**Revendications**

1. Dispersion de polyuréthane aqueuse, contenant le polyuréthane (P), le polyuréthane (P) étant fabriqué par allongement de chaîne d'au moins un prépolymère à fonction hydroxy (A) avec au moins un polyisocyanate (B), le prépolymère à fonction hydroxy (A) comprenant au moins les composants constitutifs suivants :

(A1) au moins un polyol ayant une fonctionnalité > 1,
(A2) éventuellement au moins un diol, qui est différent de (A1),
(A3) éventuellement au moins un composant constitutif hydrophile, qui comprend au moins un groupe hydrophile, qui est choisi dans le groupe constitué par un groupe ionique, un groupe potentiellement ionique, un groupe non ionique et des mélanges quelconques de ceux-ci, et au moins un groupe hydroxyle, et
(A4) au moins un composé de polyisocyanate,

et le polyuréthane (P) comprenant moins de 0,1 % en poids de groupes urée, par rapport à =N-(C=O)-N=, **caractérisé en ce que** le polyuréthane (P) présente une teneur théorique en groupes hydroxyle inférieure à 0,25 % en poids, par rapport au poids total du polyuréthane à l'état séché.

2. Procédé de fabrication d'une dispersion de polyuréthane aqueuse, comprenant les étapes suivantes dans l'ordre indiqué :

   (i) la fabrication d'un prépolymère à fonction hydroxy (A) à partir d'au moins les composants constitutifs suivants :

   (A1) au moins un polyol ayant une fonctionnalité > 1,
   (A2) éventuellement au moins un diol, qui est différent de (A1),
   (A3) éventuellement au moins un composant constitutif hydrophile, qui comprend au moins un groupe hydrophile, qui est choisi dans le groupe constitué par un groupe ionique, un groupe potentiellement ionique, un groupe non ionique et des mélanges quelconques de ceux-ci, et au moins un groupe hydroxyle, et
   (A4) au moins un composé de polyisocyanate,

   (ii) l'allongement de chaîne du prépolymère à fonction hydroxy obtenu à l'étape (i) avec au moins un polyisocyanate (B) à un degré tel que le polyuréthane (P) résultant présente une teneur théorique en groupes hydroxyle inférieure à 0,25 % en poids, par rapport au poids total du polyuréthane à l'état séché, le polyuréthane (P) résultant comprenant moins de 0,1 % en poids de groupes urée, par rapport à =N-(C=O)-N=,
   (iii) éventuellement la neutralisation du groupe potentiellement ionique du composant constitutif optionnel (A3) avant ou après l'étape (ii), et
   (iv) la dispersion du polyuréthane (P) obtenu à l'étape (ii) ou (iii) dans de l'eau.

3. Dispersion de polyuréthane aqueuse selon la revendication 1 ou procédé selon la revendication 2, dans laquelle ou dans lequel le polyuréthane (P) présente une teneur théorique en groupes hydroxyle inférieure ou égale à 0,24 % en poids, par rapport au poids total du polyuréthane à l'état séché.

4. Dispersion de polyuréthane aqueuse selon l'une quelconque des revendications 1 ou 3 ou procédé selon l'une quelconque des revendications 2 ou 3, dans laquelle ou dans lequel le polyisocyanate (B) est un polyisocyanate aromatique.

5. Dispersion de polyuréthane aqueuse selon l'une quelconque des revendications 1, 3 ou 4 ou procédé selon l'une quelconque des revendications 2 à 4, dans laquelle ou dans lequel tous les composés dudit au moins un composé de polyisocyanate (A4) sont différents de tous les polyisocyanates dudit au moins un polyisocyanate (B).

6. Dispersion de polyuréthane aqueuse selon l'une quelconque des revendications 1 ou 3 à 5 ou procédé selon l'une quelconque des revendications 2 à 5, dans laquelle ou dans lequel un rapport molaire entre les groupes isocyanate et les groupes réactifs avec les isocyanates de 0,25 à 0,95 est présent lors de la fabrication du prépolymère à fonction hydroxy (A).

7. Dispersion de polyuréthane aqueuse selon l'une quelconque des revendications 1 ou 2 à 6 ou procédé selon l'une quelconque des revendications 2 à 6, dans laquelle ou dans lequel un degré d'allongement de chaîne de 80 à 100 % est obtenu lors de l'allongement de chaîne.

8. Dispersion de polyuréthane aqueuse selon l'une quelconque des revendications 1 ou 3 à 7 ou procédé selon l'une quelconque des revendications 2 à 7, dans laquelle ou dans lequel le prépolymère à fonction hydroxy (A) comprend au moins les composants constitutifs suivants :

   (A1) au moins un polyol ayant une fonctionnalité > 1, qui est choisi dans le groupe constitué par un polyester-polyol, un polyéther-polyol, un polyester-éther-polyol et un polycarbonate-polyol,
   (A2) éventuellement au moins un diol, qui est différent de (A1) et présente une masse molaire de 62 à 450 g/mol,
   (A3) éventuellement au moins un composant constitutif hydrophile, qui comprend au moins un groupe hydrophile, qui est choisi dans le groupe constitué par un groupe acide, un groupe éther de polyoxyalkylène et des mélanges quelconques de ceux-ci, et au moins un groupe hydroxyle, et
   (A4) au moins un composé de polyisocyanate, qui est choisi dans le groupe constitué par les composés de polyisocyanate aromatiques, araliphatiques, aliphatiques et cycloaliphatiques ayant une fonctionnalité NCO $\geq$ 2, qui peuvent éventuellement comprendre des structures iminooxadiazinedione, isocyanurate, uretdione, uréthane, allophanate, biuret, urée, oxadiazinetrione, oxazolidinone, acylurée et/ou carbodiimide.

9. Dispersion de polyuréthane aqueuse selon l'une quelconque des revendications 1 ou 3 à 8 ou procédé selon l'une quelconque des revendications 2 à 8, dans laquelle ou dans lequel le composant constitutif hydrophile (A3) comprend au moins les composés suivants :

(A3-1) au moins un composé ionique ou potentiellement ionique comprenant au moins un groupe acide et au moins un groupe hydroxyle, et
(A3-2) au moins un composé contenant du polyéthylène glycol, dont la proportion de polyéthylène glycol est d'au moins 50 % en poids, qui présente une masse molaire Mn de 1 200 g/mol à 3 000 g/mol et comprend un groupe hydroxyle.

10. Dispersion de polyuréthane aqueuse selon l'une quelconque des revendications 1 ou 3 à 9 ou procédé selon l'une quelconque des revendications 2 à 9, dans laquelle ou dans lequel le prépolymère à fonction hydroxy (A) comprend au moins :

50 à 87 % en poids de (A1),
3 à 11 % en poids de (A2),
0 à 24 % en poids de (A3) et
3 à 20 % en poids de (A4),

la somme des composants constitutifs (A1) à (A4) étant de 100 % en poids.

11. Dispersion de polyuréthane aqueuse selon l'une quelconque des revendications 1 ou 3 à 10 ou procédé selon l'une quelconque des revendications 2 à 10, dans laquelle ou dans lequel la dispersion de polyuréthane aqueuse présente une teneur en solides de 20 à 55 % en poids.

12. Agent de revêtement monocomposant aqueux, contenant :

(Ia) au moins une dispersion de polyuréthane aqueuse selon l'une quelconque des revendications 1 ou 3 à 11, éventuellement en mélange avec d'autres dispersions,
(IIa) éventuellement au moins un polyisocyanate bloqué, et
(IIIa) au moins un adjuvant et/ou additif.

13. Agent de revêtement bicomposant aqueux, contenant :

(Ib) au moins une dispersion de polyuréthane aqueuse selon l'une quelconque des revendications 1 ou 3 à 11, éventuellement en mélange avec d'autres dispersions,
(IIb) au moins un polyisocyanate (C), et
(IIIb) au moins un adjuvant et/ou additif.

14. Utilisation de la dispersion de polyuréthane aqueuse selon l'une quelconque des revendications 1 ou 3 à 11 pour la fabrication de vernis, de revêtements, d'adhésifs ou de matériaux d'étanchéité.

15. Vernis, revêtement, adhésif ou matériau d'étanchéité, obtenu par durcissement de la dispersion de polyuréthane aqueuse selon l'une quelconque des revendications 1 ou 3 à 11 sur au moins une partie d'un substrat.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0669352 A1
- EP 0578940 A1
- EP 2239286 A1
- EP 0751197 A1
- WO 2010091898 A1
- EP 1790674 A1
- DE 3903804 A1
- EP 0634431 A1
- WO 2012130711 A2
- EP 0678536 A1
- DE 4344063 C1

- WO 2010108676 A1
- DE 2503872 A1
- EP 0839885 A1
- DE 102008051727 A1
- DE 102007019184 A1
- EP 1404740 A
- EP 1477508 A
- US 4108814 A
- DE 2456469 A
- DE 2853937 A

**In der Beschreibung aufgeführte Nicht-Patentliteratur**

- **P. KRÓL.** *J. Appl. Polym. Sci.,* vol. 57 (6), 739 ff